(19) Europäisches Patentamt
European Patent Office
Office européen des brevets

(11) **EP 2 348 299 B1**

(12) **EUROPEAN PATENT SPECIFICATION**

(45) Date of publication and mention
of the grant of the patent:
**20.03.2019 Bulletin 2019/12**

(51) Int Cl.:
***G01N 1/38*** *(2006.01)*    ***G01N 35/10*** *(2006.01)*
***G01N 35/00*** *(2006.01)*

(21) Application number: **11152211.6**

(22) Date of filing: **26.01.2011**

(54) **Reagent preparing apparatus**

Reagenzherstellungsverfahren

Appareil de préparation de réactif

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.01.2010 JP 2010014120**

(43) Date of publication of application:
**27.07.2011 Bulletin 2011/30**

(73) Proprietor: **SYSMEX CORPORATION
Kobe-shi,
Hyogo 651-0073 (JP)**

(72) Inventors:
• **Nakanishi, Noriyuki
Hyogo 651-0073 (JP)**
• **Ikeda, Yutaka
Hyogo 651-0073 (JP)**

(74) Representative: **Hoffmann Eitle
Patent- und Rechtsanwälte PartmbB
Arabellastraße 30
81925 München (DE)**

(56) References cited:
**EP-A2- 0 468 516      EP-A2- 2 233 929
WO-A1-2009/087828   WO-A1-2010/004789
WO-A2-2009/026919**

## Description

FIELD OF THE INVENTION

The present invention relates to a reagent preparing apparatus capable of preparing reagent by diluting a reagent stock solution with a diluting liquid.

BACKGROUND

Conventionally, there are known reagent preparing apparatuses capable of preparing reagent from pure water and reagent stock solution.

US Patent Application Publication No. 2010/161243 discloses a reagent preparing apparatus for preparing a reagent by diluting a high concentration reagent (reagent stock solution) with reverse osmosis (RO) water. This reagent preparing apparatus is configured to mix RO water and a concentrated reagent within a reagent preparing tank, and determine whether the liquid mixture is diluted to a desired concentration based on the electrical conductivity of liquid mixture measured by a conductivity sensor provided within the reagent preparing tank. When diluted to a desired concentration, the liquid mixture is then stored in a reagent storage tank that supplies the reagent (liquid mixture) to an externally connected measurement section. When the liquid mixture is not diluted to a desired concentration, however, the liquid mixture is then discarded. since the quality of the RO water supplied to the reagent preparing tank affects the electrical conductivity and quality of the liquid mixture (reagent), the user must supply the reagent preparing tank with RO water at or above a certain water quality to obtain reagent of a desired concentration and desired quality.

However, a user usually can not necessarily supply the reagent preparing apparatus with RO water at or above a certain water quality. The reagent preparing apparatus disclosed in U.S. Patent Application Publication No. 2010/161243 therefore discards the liquid mixture if the liquid mixture within the reagent preparing tank does not meet a standard conductivity when RO water of less than a predetermined water quality is supplied. In this case, the concentrated reagent (reagent stock solution) used in the mixture is wasted.

WO 2009/087828 A1 relates to an analyzer that controls purified water. If it is detected that the water is contaminated, the analyzer performs an operation to automatically discharge the contaminated purified water. Therefore, the analysis results of an analyzed sample are regarded and compared to a tolerance level. If the analysis results exceeds the tolerance level, it is concluded that the purified water is polluted and therefore is discharged.

WO 2009/026919 A2 relates to a biological sample processing system for on-site liquid production. It comprises a processing apparatus for processing biological samples and a production unit which includes two ingredient sources and a mixer station. A tap water quality control station determines the quality of tap water and transmits the information to a production controller which determines if the quality of the water is good enough for specific applications. If the quality of the tap water is not satisfying, the tap water is supplied to a purifier for purifying the tap water. Then the purified tap water is supplied to the production unit and the quality may be checked by a first quality control station. If the purified tap water does not fulfill the quality requirements it can be transported through the production unit to a waste container. A user may be alerted to check the water tap and/or the purifier. Other quality control stations may be arranged to control the quality of the ingredients supplied from different ingredient sources comprised in the production unit.

WO 2010/004789 A1 relates to an auto analyzer that comprises a setting section for setting an expiration date of a diluted solution. The diluted solution is produced by mixing a stock solution with a diluent for diluting the stock solution. A management section manages whether the diluted solution used by the auto analyzer has passed an expiration date. Based on the expiration date it is decided whether the diluted solution is used.

EP 2 233 929 A2 an intermediate document relates to a reagent preparing apparatus and a sample analyzer capable of preparing a dilute reagent containing a predetermined amount of reagent and pure water, wherein the prepared diluted reagent with a desired concentration is supplied to a measuring unit. The electrical conductivity of the diluted reagent is measured and a controller determines whether the measured electrical conductivity is within a predetermined range. If the electrical conductivity of the diluted reagent is below the predetermined range, too much pure water was added and the diluted reagent is discarded, wherein otherwise the controller determines the amount of pure water still to be added. The pH value of the pure water in a pure water metering tank is measured during the reagent preparation process and the pure water is discarded when the pH value is outside a predetermined range.

To eliminate this problem, an object the present invention is to provide a reagent preparing apparatus that is capable of preventing waste of the reagent stock solution when the supplied dilution liquid does not meet a predetermined water quality.

SUMMARY OF THE INVENTION

The present invention is defined in the appended claims. A first aspect of the present invention is a reagent preparing apparatus for preparing reagent by mixing a concentrated reagent and a diluting liquid and supplying the prepared reagent to a clinical sample measurement apparatus which measures a clinical sample using the supplied reagent, the reagent preparing apparatus comprising: a chamber for mixing the concentrated reagent and the diluting liquid; a liquid quality measurement part for measuring a quality of the diluting liquid; and a controller for controlling a flow of the diluting liquid based on the quality of the diluting liquid measured by the liquid quality measurement part.

One aspect of the reagent preparing apparatus of the present invention is that the flow of the diluting liquid is controlled to prevent low quality diluting liquid from being supplied to the mixing container side to prevent the low quality diluting liquid from being supplied to the mixing container when the diluting liquid is low quality (low purity) based on whether the diluting liquid is high quality (high purity) or low quality (low purity) by providing a controller for controlling the diluting liquid flow based on the quality of the diluting liquid measured by a water quality measuring unit. As a result, low quality (low purity) diluting liquid is prevented from being mixed with the reagent stock solution, thus preventing waste of the reagent stock solution that results from discarding the liquid mixture obtained when the low quality diluting liquid is mixed with the reagent stock solution. The present invention further provides a reagent preparing apparatus that reduces the environmental burden compared to the conventional art because the liquid mixture containing the reagent stock solution is not discarded even when low quality diluting liquid is supplied to the apparatus.

In the reagent preparing apparatus of this aspect of the present invention, it is desirable that the reagent preparing apparatus further comprises a flow channel toward the chamber and another flow channel, and the controller is preferably configured to switch a flow channel to flow diluting liquid between the flow channel toward the chamber and the another flow channel. According to this structure, the flow of the diluting liquid can easily be controlled so that low quality diluting liquid is not supplied to the mixing container side by having the controller switch the flow channel of the diluting liquid based on the quality of the liquid.

In the reagent preparing apparatus of this aspect of the present invention, it is desirable that the reagent preparing apparatus further comprises a disposal port for discarding the diluting liquid, and preferably the controller: determines whether to supply the diluting liquid to the chamber based on the measured quality of the diluting liquid; and controls the flow of the diluting liquid to discard the diluting liquid from the disposal port when the controller determines to not supply the diluting liquid to the chamber side. According to this structure, low quality diluting liquid can be easily discarded using a disposal port.

In the reagent preparing apparatus of this aspect of the present invention, it is desirable that the controller: controls the flow of the diluting liquid to supply the diluting liquid to the disposal port, measures the quality of the diluting liquid flowing toward the disposal port using the liquid quality measurement part, and determines whether to supply the diluting liquid to the chamber based on the measured quality; and controls the flow of the diluting liquid to supply the diluting liquid to the chamber when the controller determines to supply the diluting liquid to the chamber. According to this structure, it is possible to reliably prevent low quality diluting liquid from being supplied to the mixing container by obtaining the quality of the diluting liquid as it is discarded from the disposal port, and supplying the diluting liquid to the mixing container side after confirming there is no problem with the quality (purity) of the diluting liquid.

In the reagent preparing apparatus of this aspect of the present invention, it is desirable that the controller: controls the flow of the diluting liquid to supply the diluting liquid to the chamber side and measures the quality of the diluting liquid flowing toward the chamber side using the liquid quality measurement part; determines whether to stop the supply of diluting liquid to the chamber based on the measured quality; and controls the flow of the diluting liquid to discard the diluting liquid from the disposal port when the controller determines to stop the supply has been determined. According to this structure, it is possible to prevent low quality diluting liquid from being supplied to the mixing container side even when the quality has decreased while the diluting liquid is being supplied to the mixing container side by stopping the supply of the diluting liquid to the mixing container when the quality of the diluting liquid decreases as the diluting liquid is being supplied to the mixing container.

In the reagent preparing apparatus of this aspect of the present invention, it is desirable that the controller controls the flow of diluting liquid so that the diluting liquid flows continuously, and controls the liquid quality measurement part to continuously measure the quality of the diluting liquid. According to this structure, it is possible to rapidly respond to changes in the quality (purity) of the diluting liquid when the quality (purity) decreases while the diluting liquid is being supplied to the mixing container side, and when the quality (purity) of the diluting liquid improves while the diluting liquid is not being supplied to the mixing container side (while the diluting liquid is being discarded from the disposal port) and the like by continuously obtaining the quality of the diluting liquid.

In the reagent preparing apparatus of this aspect of the present invention, it is desirable that the reagent preparing apparatus further comprises a storage chamber for storing the diluting liquid to be supplied to the chamber, the liquid quality measurement part is preferably disposed on the upstream side of the storage chamber; and the controller preferably controls the flow of the diluting liquid to the storage chamber based on the measured quality of the diluting liquid. According to this structure, the supply of the diluting liquid from the storage container to the mixing container can continue immediately without stopping the reagent preparing operation even when the supply of the diluting liquid has stopped due to reduced quality (purity) because diluting liquid of satisfactory quality (purity) is prestored in the storage container.

In the reagent preparing apparatus of this aspect of the present invention, it is desirable that the reagent preparing apparatus further comprises: a disposal port for discarding the diluting liquid; and a flow channel switching part for switching the flow channel of the flowing diluting liquid between a flow channel leading from the liquid quality measurement part to the chamber, and a flow channel leading from the liquid quality measurement part to the disposal port, the controller preferably controls the flow of the diluting liquid by controlling the flow channel switching part to switch the flow channel. According to this structure, when low quality (purity) diluting liquid remains in the flow channel, it is possible to prevent the residual low quality diluting liquid that remains in the flow channel from flowing to the mixing container side by using both a flow channel for supplying high quality (purity) diluting liquid to the mixing container side, and a flow channel for supplying (discarding) low quality (purity) diluting liquid from the disposal port.

In the reagent preparing apparatus of this aspect of the present invention, it is desirable that the controller determines whether the quality of the diluting liquid measured by the liquid quality measurement part satisfies a predetermined standard, and issues an abnormality notice related to the quality of the diluting liquid when the controller determines the predetermined standard is not satisfied. According to this structure, the need for maintenance of the device for producing the diluting liquid can be known when the user is aware that the quality (purity) of the diluting liquid is poor via communication of an abnormality related to the quality (purity) of the diluting liquid.

In the reagent preparing apparatus of this aspect of the present invention, it is desirable that the predetermined standard includes a first standard and a second standard, and the controller: issues a first abnormality notice and control the flow of the pure water to not supply the diluting liquid to the chamber side when the quality does not satisfy the second standard; and issue a second abnormality notice and controls the flow of the diluting liquid to supply the diluting liquid to the chamber when the quality satisfies the second standard but does not satisfy the first standard. According to this structure, a user can be quickly made aware of the need for maintenance of the device for producing the diluting liquid based on a first abnormality communication that diluting liquid is not being supplied to the mixing container side, and a user can be quickly made aware that a maintenance period is approaching although maintenance is not required immediately based on a second abnormality communication that diluting liquid is being supplied to the mixing container side.

In the reagent preparing apparatus of this aspect of the present invention, it is desirable that the quality measurement part measures the electrical conductivity of the pure water. In this case, the amount of electrically conductive impurity in the diluting liquid can be quantitatively evaluated using the conductivity (electrical conductance, specific conductance) as an indicator. Accordingly, the quality of the diluting liquid can be evaluated with high accuracy by obtaining the electrical conductivity of the diluting liquid as the quality of the diluting liquid.

In the reagent preparing apparatus of this aspect of the present invention, it is desirable that the liquid quality measurement part passes the diluting liquid through the interior of the liquid quality measuring part and measures the electrical conductance of the diluting liquid passing therethrough. According to this structure, it is possible to rapidly obtain the quality of the diluting liquid without waiting for a set amount of diluting liquid to be stored unlike when the quality of the diluting liquid is acquired after the diluting liquid is stored. As a result, it is possible to quickly respond to changes in the quality of the diluting liquid.

In the reagent preparing apparatus of this aspect of the present invention, it is desirable that the reagent preparing apparatus, further comprises a second liquid quality measurement part for measuring the quality of a mixed solution that has been mixed in the chamber, and the controller controls the second liquid quality measurement part to measure the quality of the mixed solution, and controls the flow of the mixed solution to discard the mixed solution when the measured quality of the mixed solution does not satisfy a predetermined condition.

In the reagent preparing apparatus of this aspect of the present invention, it is desirable that the reagent preparing apparatus further comprises a first electrical conductance meter for measuring the electrical conductance of the mixed solution, the electrical conductance meter measures the electrical conductance of the mixed solution present between electrodes disposed at a first spacing, the liquid quality measurement part comprises a second electrical conductance meter for measuring the electrical conductance of the diluting liquid present between electrodes disposed at a second spacing, and the second spacing between the electrodes of the second electrical conductance meter is less than the first spacing between the electrodes of the first electrical conductance meter.

In the reagent preparing apparatus of this aspect of the present invention, it is desirable that the reagent preparing apparatus further comprises: a storage chamber for storing the diluting liquid to be supplied to the chamber; a detection part for detecting the amount of diluting liquid within the storage chamber; and an electromagnetic valve for controlling the inflow of the diluting liquid, wherein the controller controls the electromagnetic valve so the diluting liquid flows in, and controls the liquid quality measurement part to measure the quality of the inflowing diluting liquid when the detection part detects a reduced amount of diluting liquid within the storage chamber.

BRIEF DESCRIPTION OF THE DRAWINGS

FIG. 1 is a perspective view showing a blood analyzer provided with an embodiment of the reagent preparing apparatus of the present invention;

FIG. 2 is a schematic view showing the structure of the embodiment of the reagent preparing apparatus shown in FIG. 1;

FIG. 3 is a cross sectional view showing the electrical conductivity measuring unit for measuring the electrical conductivity of the RO water used in the reagent preparing apparatus of the embodiment shown in FIG. 2;

FIG. 4 is a cross sectional view showing an enlargement of the electrical conductivity measuring unit shown in FIG. 3;

FIG. 5 is a cross sectional view showing the electrical conductivity measuring unit for measuring the electrical conductivity of the reagent used in the reagent preparing apparatus of the embodiment shown in FIG. 2;

FIG. 6 is a block diagram illustrating the controller of the reagent preparing apparatus of the embodiment of the present invention;

FIG. 7 is a flow chart illustrating the operation of the embodiment of the reagent preparing apparatus of the present invention during the reagent preparing process;

FIG. 8 is a flow chart illustrating the RO water supplying process in step S4 of the reagent preparing process operation shown in FIG. 7;

FIG. 9 illustrates an RO water quality abnormality notification (abnormality notice) in the embodiment of the reagent preparing apparatus of the present invention; and

FIG. 10 illustrates an RO water quality abnormality notification (warning notice) in the embodiment of the reagent preparing apparatus of the present invention.

PREFFERED EMBODIMENT OF THE PRESENT INVENTION

An embodiment of the present invention is described hereinafter based on the drawings.

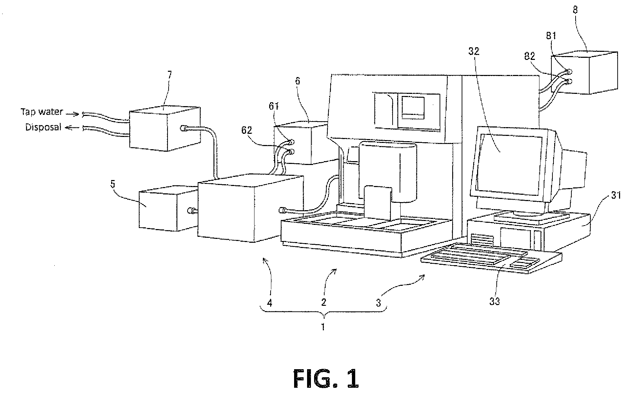

The structure of a blood analyzer 1 of an embodiment of the present invention is described below referring to FIGS. 1 through 6. In the present embodiment, the use of the reagent preparing apparatus 4 of the embodiment of the present invention is described as part of the blood analyzer 1, which performs blood analysis.

As shown in FIG. 1, the blood analyzer 1 is configured by a measurement part 2 that has the function of performing measurements of blood, data processing part 3 for analyzing the measurement data output from the measurement part 2 and obtaining analysis results, and reagent preparing apparatus 4 for preparing the reagent to be used in sample processing. The measurement part 2 is configured to perform measurements of white blood cells, red blood cells, and platelets in the blood by flow cytometry. The measurement part 2 is also configured to mix blood and reagent prepared and supplied by the reagent preparing apparatus 4, and perform measurements of white blood cells, red blood cells, and platelets. Note that flow cytometry is a method for measuring particles (blood cells) by detecting forward scattered light, side scattered light, and side fluorescent light emitted by particles (blood cells) in a measurement sample by forming a sample flow that contains a measurement sample and irradiating the sample flow with laser light.

A pneumatic part 8 installed outside the casing is connected to the measurement part 2, and various types of liquid are transported within the apparatus using the negative pressure and positive pressure supplied by the pneumatic part 8. The pneumatic part 8 has a negative pressure source 81 for supplying a negative pressure to the measurement part 2, and a positive pressure source 82 for supplying a positive pressure to the measurement part 2. Reagent to be used in measurement is aspirated from the reagent preparing apparatus 4 to the measurement part 2 using the negative pressure of the negative pressure source 81 (that is, reagent is supplied from the reagent preparing apparatus 4).

The data processing part 3 is configured by a personal computer (PC), and has the functions of analyzing the measurement data of the measurement part 2, and displaying the analysis results thereof. The data processing part 3 includes a controller (PC body) 31, display part 32, and input device 33.

The controller 31 is connected to the measurement part 2 and the reagent preparing apparatus 4 so as to be capable of communication via a communication interface that is not shown in the drawing; and has the functions of transmitting measurement start signals and shutdown signals to the measurement part 2 and reagent preparing apparatus 4, in addition to receiving measurement data from the measurement part 2. A user can select a measurement mode, and start and shutdown the measurement part 2 and reagent preparing apparatus 4 using the input device 33.

The display part 32 displays images (screens) according to image signals received from the controller 31. The data processing part 3 is configured to collect the operation information of the measurement part 2 and reagent preparing apparatus 4 via the controller 31, and communicate the various information, such as the abnormality notices, analysis process progress and the like, to the user via display on the display part 32.

In the present embodiment, the reagent preparing apparatus 4 is provided to prepare reagent to be used by the measurement part 2. Specifically, the reagent preparing apparatus 4 is configured to prepare reagent for use in blood analysis by diluting a concentrated reagent (reagent stock solution) to a predetermined concentration using RO water manufactured from tap water as the diluting liquid. RO water is one type of pure water from which impurities have been removed by passage through an RO (reverse osmosis) membrane. In addition to RO water, pure water may also be water that has been subjected to processing to remove impurities, including purified water, deionized water, and distilled water, and the purity (water quality) is not specifically limited.

The pure water (RO water) used in the preparation of reagent must be pure water (RO water) having a water quality (purity) of a predetermined degree or greater because the suitability of the water quality affects the performance (product quality) of the prepared reagent. Impurities that may be found in pure water include conductive impurities (ions) and nonconductive impurities, and the amount of conductive impurities can be evaluated as an indicator of the conductivity (specific conductance, electrical conductance) of the pure water. The quality of the pure water, therefore, can be quantitatively measured by measuring the electrical conductivity (specific conductance, electrical conductance) of the pure water, that is, measuring the level of the impurity content of the pure water. Note that the cause of degradation of the quality of the pure water may be a decrease in the quality of the tap water, or worn out parts such as filters and the like.

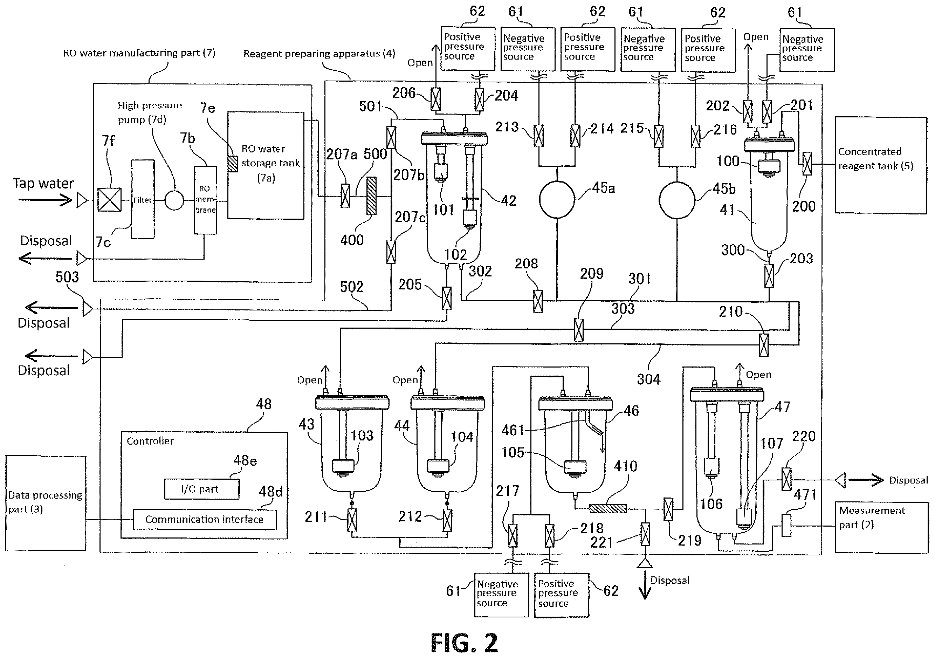

As shown in FIG. 2, the reagent preparing apparatus 4 includes a concentrated reagent chamber 41, RO water chamber 42, first dilution chamber 43 and second dilution chamber 44, two diaphragm pumps 45a and 45b, mixing chamber 46, supply chamber 47, and a controller 48 for controlling the operation of each part of the reagent preparing apparatus 4. As shown in FIG. 1, the reagent preparing apparatus 4 is connected to a concentrated reagent tank 5, pneumatic part 6, and RO water manufacturing part (RO water supply unit) 7 that are installed outside the apparatus cabinet. The reagent preparing apparatus 4 is configured to obtain the concentrated reagent and RO water from the concentrated reagent tank 5 and RO water manufacturing part 7, respectively, then deliver the liquids into the apparatus using the negative pressure and positive pressure supplied from the pneumatic part 6. The pneumatic part 6 has a negative pressure source 61 for supplying a negative pressure to the reagent preparing apparatus 4, and a positive pressure source 62 for supplying a positive pressure to the reagent preparing apparatus 4.

As shown in FIG. 2, the concentrated reagent chamber 41 is supplied concentrated reagent from the concentrated reagent tank 5. The concentrated reagent chamber 41 is provided with a float switch 100 for detecting that a predetermined amount of concentrated reagent is accommodated within the chamber. The float switch 100 is configured so that a float is raised and lowered according to the amount of liquid (liquid surface) within the concentrated reagent chamber 41; that is, a controller 48 controls each part so that when the float of the float switch 100 reaches the lower limit, concentrated reagent is supplied to the concentrated reagent chamber 41 from the concentrated reagent tank 5 until the float reaches the upper limit. Thus, concentrated reagent is supplied until, normally, approximately 300 mL of concentrated reagent is stored in the concentrated reagent chamber 41.

The concentrated reagent chamber 41 is connected to the concentrated reagent tank 5 through an electromagnetic valve 200, and the negative pressure source 61 of the pneumatic part 6 through an electromagnetic valve 201. The concentrated reagent chamber 41 is configured to be opened to the atmosphere and closed and sealed via the operation of an electromagnetic valve 202. The concentrated reagent chamber 41 is also connected to a flow channel 301 for moving liquid from the diaphragm pump 45a (45b) to the first dilution chamber 43 (second dilution chamber 44) via the flow channel 300. An electromagnetic valve 203 is provided on the flow channel 300, such that the inflow of concentrated reagent to the flow channel 301 can be controlled by operating the electromagnetic valve 203.

The RO water chamber 42 is configured to supply RO water for diluting the concentrated reagent from the RO water manufacturing part 7. The RO water chamber 42 is provided with float switches 101 and 102 for detecting when the RO water accommodated within the chamber is at an upper limit amount, and a lower limit amount, respectively. The float switch 101 (102) is configured so that the float moves vertically according to the amount of liquid (liquid surface) within the RO water chamber 42. A controller 48 controls each part so that the supply of RO water from the RO water manufacturing part 7 to the RO water chamber 42 is stopped when the float of the float switch 101 reaches the upper limit amount (approximately 600 mL) in the RO water chamber 42. The controller 48 also controls each part so that the supply of RO water from the RO water manufacturing part 7 to the RO water chamber 42 is started when the float of the float switch 102 reaches the lower limit amount (approximately 300 mL) in the RO water chamber 42. The RO water chamber 42 thus stores approximately 300 mL up to approximately 600 mL RO water during the operation of the reagent preparing apparatus 4.

The RO water chamber 42 is configured to be capable of discarding the RO water within the chamber. For example, the RO water within the chamber can be expelled to the discard flow channel by applying a positive pressure, that is, by connecting the RO water chamber 42 to the positive pressure source 62 through an electromagnetic valve 204, and connecting the chamber 42 to the discard flow channel through an electromagnetic valve 205, and opening both electromagnetic valves 204 and 205. The RO water chamber 42 is also configured to be opened to the atmosphere or closed and sealed by operating an electromagnetic valve 206. The RO water chamber 42 is further connected to the diaphragm pumps 45a and 45b by a flow channel 302 and an electromagnetic valve 208.

In the present embodiment, the RO water manufacturing part 7 and the reagent preparing apparatus 4 are connected through an inflow control valve 207a, so that the inflow (supply) of RO water to a flow channel 500 within the reagent preparing apparatus 4 is controlled by operating the inflow control valve 207a. The flow channel 500 is bifurcated and connects to a flow channel 501 for supplying RO water to the RO water chamber 41, and a flow channel 502 that connects with the disposal port 503 for discarding the inflowing RO water, respectively. The flow channel 500 and flow channel 501 are connected through a supply valve 207b, and the flow channel 500 and flow channel 502 are connected through a disposal valve 207c. The RO water supplied from the RO water manufacturing part 7 thus inflows to the RO water chamber 42 through the flow channel 500 and flow channel 501 when the disposal valve 207c is closed and the inflow control valve 207a and supply valve 207b are open. The RO water supplied from the RO water manufacturing part 7 is discarded from the disposal port 503 via the flow channel 500 and flow channel 502 when the supply valve 207b is closed and the inflow control valve 207a and disposal valve 207c are open. The supply valve 207b and disposal valve 207c are therefore configured to function as channel switching parts of the flow channels 501 and 502, respectively.

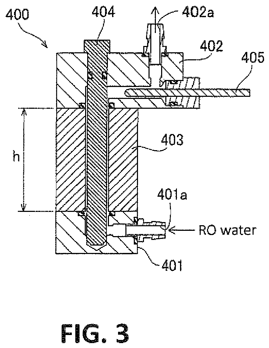

In this embodiment, an electrical conductance measuring unit 400 is disposed (in flow channel 500) between the inflow control valve 207a, supply valve 207b, and disposal valve 207c. The electrical conductance measuring unit 400 is accordingly disposed on the upstream side of the RO water supply channel relative to the RO water chamber 41. The electrical conductance measuring unit 400 incorporates an electrical conduction meter and temperature senor (thermistor), which has the function of measuring the electrical conductance of the RO water as the water quality of the supplied RO water. As shown in FIG. 3, the electrical conductance measuring unit 400 includes a body 401 provided with an inlet 401a for the inflow of RO water from the inflow control valve 207a side, a columnar (rod) electrode 404 disposed in the center within cylindrical electrodes 403 and 403 that are connected to the main body 401, a body 402 that is connected to the electrode 403 and is provided with an outlet 402a for the outflow of RO water that has passed within the unit to the supply valve 207b (disposal valve 207c) side, and a thermistor 405 for measuring the temperature of the RO water. The RO water inflows from the inlet 401a, passes through the gap between the electrode 403 and electrode 404, passes near the thermistor 405, and is flows out from the outlet 402a. The electrical conductance measuring unit 400 is configured to measure the electrical conductance of the RO water that continuously passes through the gap between the electrode 403 and electrode 404 within the housing. In the present embodiment, the controller 48 controls the flow of the RO water supplied to the first dilution chamber 43 or second dilution chamber 44 side to be used for diluting the concentrated reagent with RO water based on the measured electrical conductance of the RO water. That is, the controller 48 determines whether to supply the RO water to the RO water tank 42 through the flow channel 501, or discard the RO water from the disposal port 503 via the flow channel 502.

In general, the electrical conductance Z of a liquid can be expressed by equation (1) below by obtaining the resistance value R of the liquid present between the electrodes when a voltage is applied between the electrodes with the surface area S of the plate electrodes separated by a distance D (plate model).

$$Z = (1 / R) \times (D / S) \cdots (1)$$

Since pure water has a low electrical conductance Z, the surface area S of the electrodes must be large and the space between electrodes D must be small in order to perform acceptably accurate measurements. It is possible to perform highly precise measurements since the measure electrical resistance R is also low at this time. The sensitivity of the electrical conductance measuring unit can therefore be changed by modifying the electrode surface area S and electrode separation distance D.

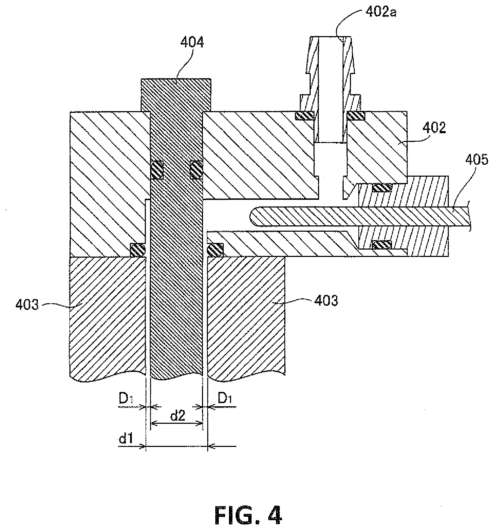

As shown in FIG. 4, the present embodiment is configured to allow the electrical conductance of the supplied RO water (pure water) to be easily measured with high precision by reducing the electrode separation distance D between the electrodes 403 and 404. Specifically, the cylindrical electrode 403 has an internal diameter d1, and the columnar electrode 404 has a major diameter d2. The electrode separation distance D1 is (d1/d2)/2 at this time. In the present embodiment, d1= approximately 7.2 mm, d2= approximately 6.0 mm, and D1= approximately 0.6 mm.

The cylindrical electrode 403 has a height h, and, in the present embodiment, h= approximately 35 mm, for example. The electrode surface area S is, therefore, S1=Sn×D1×h. Note that equation (1) obtains a theoretical value using the plate model; the actual value of (electrode distance D/electrode area S) is a value obtained by reverse calculation by premeasuring the electrical conductance Z using a known standard liquid.

Since the measured electrical conductance Z changes depending on the temperature, the electrical conductance Zw (25°C conversion value) converted to standard temperature (25°C) by the controller 48 is calculated by temperature compensation using the temperature of the RO water measured by the thermistor 405. In the present embodiment, the controller 48 determines whether the Zw (25°C conversion value) exceeds a predetermined threshold value (the Zw (25°C conversion value) of either a first threshold value Z1 or second threshold value Z2). In the present embodiment, the first threshold Z1 (Zw (25°C conversion value) is set at approximately 1 ($\mu$s/cm), and the second threshold value Z2 (Zw (25°C conversion value) is set at approximately 3 to 5 ($\mu$s/cm). When the calculated electrical conductance Zw exceeds the first threshold value Z1, the controller 48 issues an abnormality notice (level 1, warning) that the water quality is low to the user. When the obtained electrical conductance Zw exceeds the second threshold value Z2, the controller 48 issues an abnormality notice (level 2, abnormal) that the water quality is deteriorating to the user, and controls each part to stop the supply of RO water to the RO water chamber 42 and discard the RO water to the disposal port 503. Note that the first threshold value Z1 (25°C conversion value) equaling approximately 1 ($\mu$s/cm) and the second threshold value Z2 (25°C conversion value) equaling approximately 3 to 5 ($\mu$s/cm) will differ according to the type of reagent to be used and the region of use, and the values can be changed (set) by the user according to the purpose.

As shown in FIG. 2, the first dilution chamber 43 and the second dilution chamber 44 are respectively provided to dilute the concentrated reagent with RO water. The first dilution chamber 43 (second dilution chamber 44) is capable of accommodating approximately 300 mL of liquid (concentrated reagent and RO water mixed solution) received from the diaphragm pumps 45a and 45b. The first dilution chamber 43 (second dilution chamber 44) is provided with a float switch 103 (104) that moves vertically to detect the when the residual amount of liquid (concentrated reagent and RO water mixed solution) reaches a predetermined amount within the chamber. The first dilution chamber 43 (second dilution chamber 44) is normally open to the atmosphere. The first dilution chamber 43 (second dilution chamber 44) also is connected to the flow channel 301 by way of the flow channel 303 (304) and the electromagnetic valve 209. The liquid (RO water and concentrated reagent) received through the flow channel 301 can be selectively supplied to the first dilution chamber 43 from the flow channel 303 or the second dilution chamber 44 from the flow channel 304 by controlling the operation of the electromagnetic valves 209 and 210. The first dilution chamber 43 (second dilution chamber 44) is connected to a mixing chamber 46 through an electromagnetic valve 211 (212).

Diaphragm pumps 45a and 45b have mutually similar structures, and are configured to perform identical operations at the same time. The diaphragm pump 45a (45b) have the function of dispensing a set amount of approximately 6.0 mL (set dose) of RO water and concentrated reagent in a single dosing operating, respectively; thus, a total of approximately 12 mL (about 6.0 mL × 2) of liquid is supplied per single dosing operation. The diaphragm pump 45a (45b) is also connected to the negative pressure source 61 through an electromagnetic valve 213 (215), and is connected to the positive pressure source 62 through an electromagnetic valve 214 (216).

The liquid (RO water and concentrated reagent) supplying operation performed by the diaphragm pumps 45a and 45b include two processes, that is, an inflow of liquid performed by the negative pressure source 61 through the electromagnetic valve 213 (215), and an outflow of liquid performed by the positive pressure source 62 through the electromagnetic valve 214 (216). In these processes, concentrated reagent or RO water from the concentrated reagent chamber 41 or RO water chamber 42 inflows via the selection of a predetermined flow channel from the flow channels 300 to 304 in conjunction with the controlled operation of the electromagnetic valves 203, 208, 209, and 210, so as to supply multiple times the fixed dose of approximately 12 mL (about 6.0 mL × 2) each time to the first dilution chamber 43 or second dilution chamber 44.

The mixing chamber 46 can accommodate approximately 300 mL of liquid, and is provided to mix the liquids (concentrated reagent and RO water) supplied from the first dilution chamber 43 (second dilution chamber 44). Specifically, the mixing chamber 46 has a curved pipe 461, and a convection is generated by the liquid supplied from the first dilution chamber 43 (second dilution chamber 44) as it flows along the inner wall surface of the mixing chamber 46, thereby mixing the concentrated reagent and RO water.

The mixing chamber 46 is provided with a float switch 105 that moves vertically to detect when the residual amount of liquid (concentrated reagent and RO water mixed solution) in the chamber reaches a predetermined amount. The chamber is empty when the float of the float switch 105 reaches the lower limit, and the controller controls each part to supply approximately 300 mL of mixed solution (the total amount of mixed solution within the chamber) from wither the first solution chamber 43 or second dilution chamber 44 to the mixing chamber 46 by closing the electromagnetic valve 218 and opening the electromagnetic valve 211 (or 212) and electromagnetic valve 217.

The supply chamber 47 is provided to store the reagent to be supplied to the measurement part 2. The supply chamber 47 can accommodate a maximum quantity of approximately 600 mL of reagent (that is, a mixed solution having a predetermined concentration of reagent). The supply chamber 47 is provided with a float switch 106 for detecting when the residual amount of reagent accommodated in the chamber reaches approximately 300 mL, and a float switch 107 for detecting when the amount of residual reagent is near zero. The float switch 106 (107) is configured so that the float moves vertically according to the amount of liquid (liquid surface) within the supply chamber 47. When the float of the float switch 106 reaches the lower limit position, the controller 48 controls each part to supply approximately 300 mL of reagent of a predetermined concentration from the mixing chamber 46 to the supply chamber 47. Thus, reagent can usually be supplied to the measurement part 2 by prestoring a predetermined amount of reagent in the supply chamber 47. Note that, although the reagent is prestored in the supply chamber 47, deterioration of the reagent because the reagent contains preservative.

Delivery of the reagent to the measurement part 2 is stopped when the residual amount of reagent within the supply chamber 47 is near zero as detected by the float switch 107. Thus, the supply of reagent to the measurement part 2 is continuous and air bubbles are prevented from contaminating the reagent supplied to the measurement part 2 even when the reagent has not been supplied to the supply chamber 47 for some reason.

The supply chamber 47 is connected to the mixing chamber 46 through an electromagnetic valve 219. The supply chamber 47 is configured to allow disposal of the reagent within the chamber for maintenance or the like by opening an electromagnetic valve 220. The supply chamber 47 is usually open to the atmosphere. The supply chamber 47 is also connected to the measurement part 2 through a filter 471. The filter 471 is provided to prevent impurities from contaminating the reagent that is to be supplied to the measurement part 2.

In the present embodiment, an electrical conductance measuring unit 410 is disposed between the mixing chamber 46 and the supply chamber 47. The electrical conductance measuring unit 410 includes a conduction meter and a temperature sensor (thermistor), and has the function of measuring the electrical conductance of the reagent at the position at which the electrical conductance measuring unit 410 is installed. Since the concentration and conductance of the reagent have a predetermined relationship, it is possible to determine the concentration of the prepared reagent by measuring the electrical conductance of the reagent of mixed RO water and reagent (mixed solution). A discard flow channel is connected through an electromagnetic valve 221 between the electrical conductance measuring unit 410 and the electromagnetic valve 219. The reagent is discarded from the discard channel when the measured concentration of the reagent is undesirable.

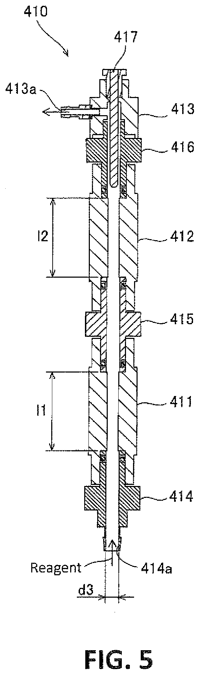

As shown in FIG. 5, the electrical conductance measuring unit 410 includes a first body 411 and second body 412, third body 413 provided with an outlet 413a for discharging the reagent passing therethrough to the supply chamber 47 side, electrode 414 provided with an inlet 414a for the reagent received from the mixing chamber 46 side, electrode 415 disposed between the first body 411 and second body 412, electrode 416 disposed between the second body 412 and the third body 413, and a thermistor 417 for measuring the temperature of the reagent. The interior of the first body 411, second body 412, third body 413, electrode 414, electrode 415, and electrode 416 forms a flow channel, and reagent inflowing from the inlet 414a of the electrode 414 passes therethrough and is discharged from the outlet 413a of the third body 413. The electrical conductance measuring unit 410 is configured to measure the conductance of the reagent passing between the electrodes 414, 415, and 416.

Specifically, both ends of the electrodes 414 and 416 are grounded, and a power source is connected to the center of the electrode 415 to apply a voltage between the electrodes 414 and 415 and between the electrodes 415 and 416. At this time, the resistance value of the reagent present between the electrodes 414 and 415, and the resistance value of the reagent present between the electrodes 415 and 416, are equivalent to the resistance value R of equation (1). since the direction of the electrical current flow matches the direction of the extended reagent flow channel, the surface area S of the electrodes in equation (1) corresponds to the cross sectional area of the reagent flow channel, and the interval D between electrodes in equation 91) corresponds to the distance 11 between the electrodes 414 and 415, and the distance 12 between the electrodes 415 and 416.

In the present embodiment, the distance 11 between the electrodes 414 and 415, and the distance 12 between the electrodes 415 and 416 are mutually equal, such that 11=12= approximately 27 mm. In the electrical conductance measuring unit 410, therefore, the interval between the electrodes 414 and 415 (equals the interval between the electrodes 415 and 416) D2 is approximately 27 mm. When the interval D between electrodes is compared in the electrical conductance measuring unit 400 and the electrical conductance measuring unit 410, the electrode interval D1 (about 0.6 mm) of the electrical conductance measuring unit 400 is less than the electrode interval D2 (about 27 mm) of the electrical conductance measuring unit 410. Thus, it is possible to precisely measure the electrical conductance of the RO water in the electrical conductance measuring unit 400 for measuring RO water that has a low conductance Z because the electrode interval D1 is small, and precisely measure the RO water and reagent (mixed solution) in the electrical conductance measuring unit 410 for measuring reagent that has a high conductance Z by mixing RO water and concentrated reagent.

The inner diameter d3 of the reagent flow channel of the electrical conductance measuring unit 410 is approximately 3. 5 mm. Therefore, the surface area (cross sectional area) corresponding to the surface area S of the electrode in equation (1) is $S_2 = \pi \times (d3)^2$ in the electrical conductance measuring unit 410. When comparing the area S, the electrode area S1 of the conductance measuring unit 400 for measuring RO water is greater than the electrode area S2 in the conductance measuring unit 410 for measuring reagent in accordance with the difference in magnitude of the conductance of the respective measurement objects. Note that in the conductance measuring unit 410 the actual value of (electrode interval D/electrode area S) is a value obtained by reverse calculation by premeasuring the conductance Z using a known standard solution, and may be used as an intrinsic value of the conductance measuring unit 410.

Since the measured electrical conductance Z changes depending on the temperature, temperature compensation is performed using the temperature of the reagent as measured by the thermistor 417, and the controller 48 calculates the electrical conductance Zr of the reagent converted to a standard temperature of 25° (25°C conversion value). Then, the controller determines whether the reagent concentration is suitable (whether to discard the reagent) by comparing the Zr (25°C conversion value) to a standard value Z0 of the reagent concentration at the standard temperature (25°C) previously determined by experimentation, and determining whether Zr is within a predetermined range relative to the standard value Z0.

As shown in FIG. 2, the RO water manufacturing part (RO water supply unit) 7 that is connected to the reagent preparing apparatus 4 is configured to manufacture RO water for diluting concentrated reagent using tap water. The RO water manufacturing part 7 includes an RO water storage tank 7a, RO membrane 7b, and a filter 7c that protects the membrane 7b by removing impurities contained in the tap water. The RO water manufacturing part 7 includes a high pressure pump 7d for applying a high pressure to the water that has passed through the filter 7c to allow the water molecules to pass through the RO membrane 7b, and an electromagnetic valve 7f for controlling the supply of tap water.

The RO water storage tank 7a is provided to store RO water that has passed through the RO membrane 7b. The RO water storage tank 7a is provided with a float switch 7e to detect when a predetermined amount of RO water is stored. Note that the speed of supplying RO water from the RO water manufacturing part 7 to RO water storage tank 7a, that is, the RO water manufacturing speed of the RO water manufacturing part 7, is 20 L/hour or more but less than approximately 50 L/hour.

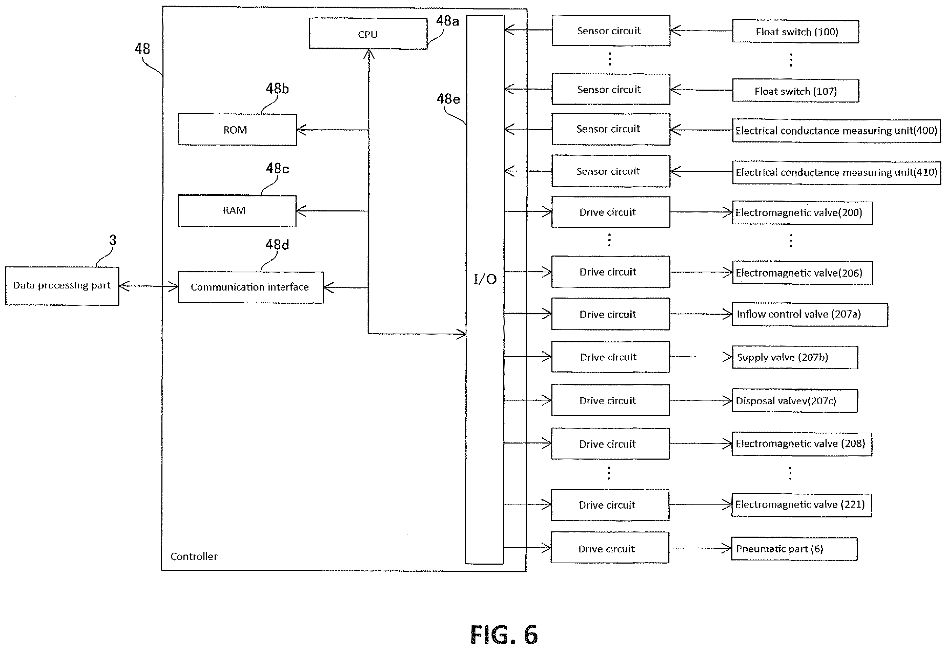

As shown in FIG. 6, the controller 48 includes a CPU 48a, ROM 48b, RAM 48c, communication interface 48d for connecting to the data processing part 3, and I/O (input/output) part 48e for connecting to each part within the reagent preparing apparatus 4 through various circuits.

The CPU 48a is provided to execute the computer programs stored in the ROM 48b, and the computer programs loaded in the RAM 48c. The CPU 48a is configured to use the RAM 48c as a work area when executing the computer programs.

The communication interface is configured to be capable of transferring error information to the data processing part 3 so that the user can confirm that an error has been generated within the reagent preparing apparatus 4. Error information includes information indicating the replacement of the concentrated reagent tank 5 and water quality abnormality notice (warning and abnormality) for the RO water, and information indicating abnormality of the negative pressure source 61 and positive pressure source 62. Error notices are displayed on the display part 32 of the data processing part 3 based on the error information.

As shown in FIG. 6, the I/O part 48e receives signals from the float switches 100 to 107, electrical conductance measuring unit 400 and electrical conductance measuring unit 410 through various circuits. The I/O part 48e also outputs signals to various drive circuits to control the actuation of electromagnetic valves 200 to 206, inflow control valve 207a, supply valve 207b, disposal valve 207c, electromagnetic valves 208 to 221, and pneumatic part 6.

The operation of the reagent preparing apparatus 4 of the embodiment of the present invention during the reagent preparation process is described below with reference to FIGS. 1, 2, and 7.

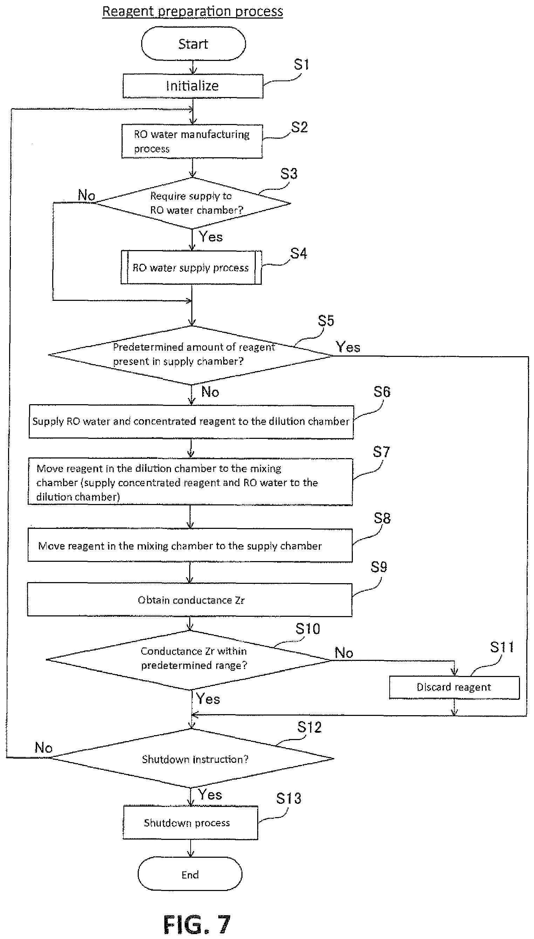

As shown in FIG. 2, the operation during the reagent preparation process starts when a user issues an apparatus start instruction from the data processing part 3, that is, when the reagent preparing apparatus receives a start signal from the data processing part 3. When the reagent preparation process starts, the CPU 48a first initializes the computer programs stored in the ROM 48b in step S1 of FIG. 7.

In step S2, the RO water preparation process is started in the RO water preparing part 7. That is, the high pressure pump 7d is actuated and water that has passed through the filter 7c is then passed through the Ro membrane 7b at high pressure. RO water is supplied to the RO water storage tank 7a until a predetermined amount of RO water has accumulated therein based on the detection results of the float switch 7e.

In step S3, the CPU 48a determines whether RO water must be supplied to the RO water tank 42 based on the detection result of the float switch 102 (refer to FIG. 2). The CPU 48a determines that RO water must be supplied when the float of the float switch 102 reaches a position corresponding to the lower limit amount (about 300 mL) in the RO water tank 42, then the routine advances to step S4. When the CPU 48a determines that more RO water is not required, the process of step S4 is skipped, and the routine advances to step S5. In step S4, the CPU 48a executes a process to supply RO water to the RO water tank 42. In this case, the quality (electrical conductance Zw) of the RO water supplied from the RO water manufacturing part 7 is measured by the electrical conductance measuring unit 400, and insofar as the water quality does not pose a problem, the RO water is supplied to the RO water tank 42 based on the detection results of the float switch 101 (102). Thereafter, the RO water supply process is continuously executed and RO water is gradually supplied to the RO water tank 42 based on the detection results of the float switch 101 (102). Note that this RO water supply process is described in detail later.

In step S5, the CPU 48a determines whether a predetermined amount of reagent is stored in the supply chamber 47. That is, the CPU 48a determines whether a predetermined amount (approximately 300 mL or more but less than 600 mL) of reagent is stored in the supply chamber 47 based on the detection result of the float switch 106. When the predetermined amount of reagent is stored in the supply chamber 47, the routine moves to step S12.

When the predetermined amount of reagent is not stored in the supply chamber 47, however, concentrated reagent and RO water are supplied to the first dilution chamber 43 (or second dilution chamber 44) by the diaphragm pumps 45a and 45b in step S6. The diaphragm pumps 45a and 45b aspirate approximately 12.0 mL $\times$ 24 times = about 288 mL or RO water to the RO water chamber 42, and supply this RO water to the first dilution chamber 43 or second dilution chamber 44. Further, approximately 12.0 mL × 1 time= about 12 mL concentrated reagent is aspirated to the concentrated reagent chamber 41, and then supplied to the first dilution chamber 43 or second dilution chamber 44. Accordingly, about 288 mL plus about 12 mL, that is, a total of approximately 300 mL of mixed solution is supplied. Note that the RO water and concentrated reagent are respectively supplied (supplemented) in the RO water chamber 42 and concentrated reagent chamber 41 based on the detection results of the float switch 101 (102), and float switch 100.

In step S7, the total amount of the approximately 300 mL of mixed solution accommodated in the first dilution chamber 43 (or second dilution chamber 44) is supplied to the mixing chamber 46. At this time, the supplied mixed solution is mixed in the mixing chamber 46 by pipe 461 provided within the mixing chamber 46 along the inner wall of the mixing chamber 46. For example, the approximately 300 mL of mixed solution is supplied to the second dilution chamber 44 in step S2 while the mixed solution is being supplied from the first dilution chamber 43 to the mixing chamber 46. Accordingly, the first dilution chamber 43 and second dilution chamber 44 alternately perform a supply operation for supplying reagent (mixed solution) to the mixing chamber 46, and dilution operation for supplying a total of about 300 mL of RO water and concentrated reagent.

In step S8, the electromagnetic valves 218 and 219 are opened, and reagent is supplied (moved) to the supply chamber 47. At this time, in step S9, the electrical conductance measuring unit 410 measures the conductance of the supplied reagent, and the thermistor 417 measures the temperature of the reagent. Thus, the CPU 48a calculates the reagent conductance value Zr (25°C conversion value) by converting the conductance at the measured reagent temperature to a standard temperature (25°C). In step S10, the CPU 48a determines whether the reagent conductance Zr (25°C conversion value) is within a predetermined range. That is, the CPU 48a determines whether the 25°C conversion value Zr of the measured conductance is within a predetermined range relative to a reagent conductance standard value Z0 at a premeasured 25-fold dilution rate. When the electrical conductance Zr is not within the predetermined range, the electromagnetic valve 219 (refer to FIG. 2) is closed, the electromagnetic valve 221 (refer to FIG. 2) is opened, and the reagent which has a conductance Zr outside the predetermined range is discarded via the discard flow channel in step S11. Thus, only precisely diluted reagent can be stored in the supply chamber 47. Note that reagent is supplied from the second dilution chamber 44 (or first dilution chamber 43) to the mixing chamber 46 when the float switch 105 detects that the mixing chamber 46 is empty of reagent due to reagent being supplied from the mixing chamber 46 to the supply chamber 47 or reagent being discarded.

In step S12, the CPU 48a determines whether the user has issued a shutdown instruction; if not, the routine moves to step S2. When a shutdown instruction has not been issued in step S12, the processes of steps S2 through S12 are therefore repeated. The measurement part 2 performs the sample measurement operation (using reagent) during the processing from step S2 through S12. Thus, the reagent within the supply chamber 47 is aspirated to the measurement part 2 (supplied to the measurement part 2) by the negative pressure from the negative pressure source 81 (refer to FIG. 1) of the pneumatic part 8 (refer to FIG. 1) in parallel with the processing of steps S2 through S12. As previously described, concentrated reagent, RO water, and mixed solution are supplied to the concentrated reagent chamber 41, RO water chamber 42, first dilution chamber 43, second dilution chamber 44, and mixing chamber 46 based on the detection results of the float switches 100 through 105 in steps S6 through S8. Although the operations of steps S2 through S8 are performed sequentially while the chambers are empty of liquid, in the subsequent operation, supplying of each liquid to the chambers is performed with a timing determined by the need for each liquid based on the detection results of the float switches 100 through 105 regardless of the determination results related to the amount of reagent in the supply chamber 47 in step S5.

When a shutdown instruction has been issued, however, the predetermined shutdown process is executed in step S13. For example, while reagent is being prepared, the operation continues until eventually the reagent has been supplied to the supply chamber 47. When the supplying of the RO water to the RO water chamber 42 is completed, RO water is expelled from the RO water chamber. Thus, the RO water is prevented from remaining in the RO water chamber 42 until the reagent preparing apparatus 4 is started the next time. When the shutdown process is performed normally, the reagent preparation process operation ends.

The process of supplying RO water shown in step S4 of the reagent preparation process performed by the reagent preparing apparatus 4 of the embodiment of the present invention is described below with reference to FIGS. 2, 7 through 10. The RO water supply process is performed with each part of the apparatus controlled by the controller 48 (CPU 48a).

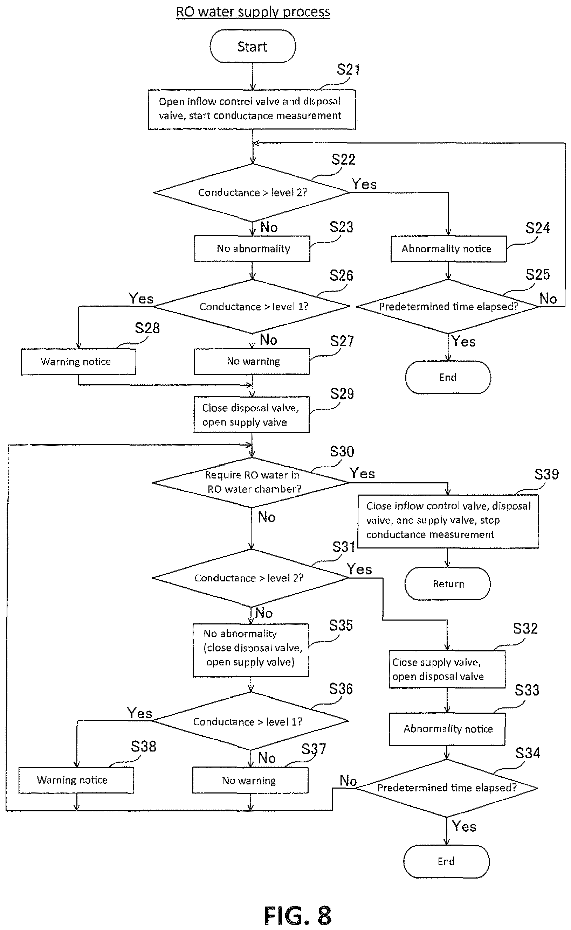

As shown in FIG. 8, the CPU 48a opens the inflow control valve 207a and disposal valve 207c (and closes the supply valve 207b) in step S21. At this time, the quality of the RO water is measured as the RO water passes through the interior of the electrical conductance measuring unit 400 provided in the flow channel 500 when the RO water flows from the RO water manufacturing part 7 into the flow channel 500 of the reagent preparing apparatus 4. That is, the electrical conductance of the supplied RO water is measured and the temperature of the RO water is measured by the thermistor 405. Thus, the CPU 48a calculates the RO water conductance value Zw (25°C conversion value) by converting the conductance at the measured RO water temperature to a standard temperature (25°C) via temperature compensation. The measurement of the RO water quality (electrical conductance Zw) continues until the supplying of the RO water is completed, and the measurement of the RO water quality (electrical conductance Zw) is performed continuously in conjunction with the passage of the RO water within the electrical conduction measuring unit 400. The inflow RO water is discarded from the disposal port 503 by opening the discard valve 207c since the RO water flow channel 500 is connected to the flow channel 502 leading to the disposal port 503.

In step S22, the CPU 48a determines whether the RO water electrical conductance Zw (25°C conversion value) measured by the electrical conductance measuring unit 400 is greater than level 2 (second threshold value Z2 (25°C conversion value)). In the present embodiment, the CPU 48a determines whether the RO water electrical conductance Zw (25°C conversion value) is greater than a value Z2 (25°C conversion value) of approximately 3 to 5 ($\mu$s/cm).

When the RO water conductance Zw (25°C conversion value) is greater than the second threshold Z2 (25°C conversion value), the routine continues to step S24, an abnormality notice is transmitted to the data processing part 3 while the RO water delivery remains stopped (RO water is discarded from the disposal port 503), and a message (abnormality notice) is displayed on the display 32. Thus, the delivery of the RO water is curtailed and the user is notified of the abnormal (level 2, water quality abnormal) RO water quality. In this case, the RO water can not be supplied, and the content of the message notifies the user to immediately execute confirmation of the RO water manufacturing part 7 (RO water supply unit). Thereafter, in step S25, a determination is made as to whether a predetermined time has elapsed since the abnormality notice; the routine returns to step S22 if the predetermined time has not elapsed. Accordingly, when the quality of the RO water from the RO water manufacturing part 7 has not improved, the routine loops so that the delivery of the RO water remains stopped (discharged from the disposal port 503) and the abnormality notice continues and step S25 is reached once again. When the predetermined time has elapsed in step S25, the process times out and is terminated.

When the RO water conductance Zw (25°C conversion value) is determined to be equal to or less than the second threshold value Z2, which is approximately 3 to 5 ($\mu$s/cm) in step S22, the routine continues to step S23 and the RO water quality is determined to be abnormality-free (level 2, no abnormality). In step S24, when the abnormality notice is executed and thereafter the quality of the RO water from the RO water manufacturing part 7 has improved before the elapse of the predetermined time, the abnormality notice is cancelled.

In step S26, the CPU 48a determines whether the RO water electrical conductance Zw (25°C conversion value) measured by the electrical conductance measuring unit 400 is greater than level 1 (first threshold value Z1 (25°C conversion value)). In the present embodiment, the CPU 48a determines whether the RO water electrical conductance Zw (25°C conversion value) is greater than a value Z1 (25°C conversion value) of approximately 1 ($\mu$s/cm).

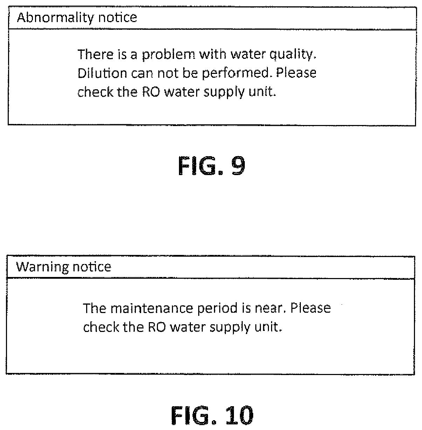

When the RO water conductance Zw (25°C conversion value) is determined to be equal to or less than the first threshold value Z1, which is approximately 1 ($\mu$s/cm) in step S26, the routine continues to step S27 and the RO water quality is determined to be warning-free (level 1, no warning). When the RO water conductance Zw (25°C conversion value) is greater than the first threshold value Z1 (25°C conversion value), the routine continues to step S28 and a warning notice is transmitted to the data processing part 3, and the warning notice shown in FIG. 10 is displayed on the display 32. Thus, the user is notified of the abnormal (level 1, warning) RO water quality at a level that allows delivery of the RO water. In this case, since the RO water can be delivered, a message is displayed and the content notifies the user that the maintenance period is near for the RO water manufacturing part 7.

In step S29, the CPU 48a closes the open disposal valve 207c and opens the supply valve 207b. Since the RO water flow channel is switched to the channel 501 leading to the RO water chamber 42 by opening the supply valve 207b, the RO water delivery begins to supply RO water that has a conductance Zw (25°C conversion value) of level 1 (first threshold value Z1 of approximately 1 ($\mu$s/cm)) or less.

Thereafter, in step S30, a determination is made as to whether it is necessary to supply RO water to the RO water chamber 42 based on the detection results of the float switch 101 (refer to FIG. 2). It is determined that the RO water supply is required (No) until the float of the float switch 101 reached the position corresponding to the upper limit amount (about 600 mL) of the RO water chamber 42, and then the routine continues to step S31.

In step S31, the CPU 48a determines whether the RO water electrical conductance Zw (25°C conversion value) measured by the electrical conductance measuring unit 400 is greater than level 2 (second threshold value Z2 (25°C conversion value)), similar to step S22. That is, the quality (electrical conductance) of the RO water supplied is continuously monitored while the RO water is being supplied to the RO water chamber 42.

When the RO water conductance Zw (25°C conversion value) is greater than the second threshold value Z2 (25°C conversion value), the routine continues to step S32 and the CPU 48a closes the open supply valve 207b, and opens the disposal valve 207c. The delivery of the RO water to the RO water chamber 42 is therefore stopped. In step S33, the user receives an abnormality notice (level 2, water quality abnormality; refer to FIG. 9) similar to step S24. In step S34, a determination is made as to whether a predetermined time has elapsed since the abnormality notice similar to step S25; the routine returns to step S30 if the predetermined time has not elapsed. Accordingly, when the quality of the RO water from the RO water manufacturing part 7 has not improved, the delivery of the RO water remains stopped (discharged from the disposal port 503) and the abnormality notice continues until the process times out and is terminated.

When the RO water conductance Zw (25°C conversion value) is determined to be equal to or less than the second threshold value Z2 in step S31, the routine continues to step S35 and the RO water quality is determined to be abnormality-free (level 2, no abnormality). Note that even when the RO water delivery has been stopped in step S32 and an abnormality notice issued in step S33, the abnormality notice is cancelled if the RO water quality from the RO water manufacturing In this case, the disposal valve 207c that was opened to stop the delivery of RO water is now closed, the supply valve 207b is opened, and the RO water is again supplied to the RO water chamber 42.

In step S36, the CPU 48a determines whether the RO water electrical conductance Zw (25°C conversion value) measured by the electrical conductance measuring unit 400 is greater than level 1 (first threshold value Z1 (25°C conversion value)), similar to step S26.

When the RO water conductance Zw (25°C conversion value) is determined to be equal to or less than the first threshold value Z1, which is approximately 1 ($\mu$s/cm) in step S36, the routine continues to step S37 and the RO water quality is determined to be warning-free (level 1, no warning). Note that when, for example, a level 1 warning has been issued in step S28, the warning is cancelled if the RO water quality has improved from level 1 while RO water is being supplied (electrical conductance Zw becomes level 1 or less).

When the RO water conductance Zw (25°C conversion value) is determined to be greater than the first threshold value Z1, the routine continues to step S38, a warning notice is transmitted to the data processing part 3, and the user receives a warning notice (level 1, warning; refer to FIG. 10) similar to step S28. Since the RO water can still be supplied in this case, the delivery of the RO water continues as before. Note that the warning is maintained if a level 1 warning notice has been issued in step S28.

Thereafter, the routine returns to step S30, and the processes of steps S30 through S38 are repeated until the float of the float switch 101 reaches the position corresponding to the upper limit amount (about 600 mL) of the RO water chamber 42. It is determined that the RO water supply is not required (Yes) when the float of the float switch 101 reaches the position corresponding to the upper limit amount (about 600 mL) of the RO water chamber 42, and the routine continues to step S39.

In step S39, the CPU 48a closes the inflow control valve 207a, supply valve 207b, and disposal valve 207c, stops the water quality (conductance Zw) measurement by the electrical conductance measuring unit 400, and returns to the main routine (refer to FIG. 7). Thus, one cycle of the RO water supply process is completed.

Since reagent is continuously prepared in conjunction the use of the reagent by the measurement part 2 in the reagent preparing process shown in FIG. 7 and described above, the RO water within the RO water chamber 42 is decreases in conjunction with the concentrated reagent and RO water supply processes to the first dilution chamber 43 (or second dilution chamber 44) in step S6. Therefore, the RO water supply process is executed by determining that RO water delivery to the RO water chamber 42 is required in step S3 (refer to FIG. 8) by the timing with which the lower limit amount of the RO water chamber 42 is reached via the supply of RO water to the first dilution chamber 43 (second dilution chamber 44) in step S4 and subsequent steps. The RO water supply process ends by executing the shutdown process in step S13 of FIG. 7.

In the present embodiment described above, the delivery of low quality RO water to the first dilution chamber 43 (second dilution chamber 44) is prevented by controlling the flow of RO water so as to not supply low quality Ro water to the first dilution chamber 43 (second dilution chamber 44) when the RO water quality is low (high electrical conductance Zw) based on the electrical conductance Zw that is quantitatively evaluated as high quality (high purity) or low quality (low purity) by providing a controller 48 (CPU 48a) for controlling the RO water flow based on the electrical conductance Zw obtained by measuring the RO water via the electrical measuring unit 400. As a result, it is possible to prevent waste of the concentrated reagent (reagent stock solution) due to discarding the mixed solution of low quality RO water and concentrated reagent (reagent stock solution) by preventing the mixing of the low quality (high conductance Zw) RO water and concentrated reagent (reagent stock solution). The provided reagent preparing apparatus reduces the burden on the environment since a mixed solution containing low quality RO water and concentrated reagent is not discarded when low quality RO water has been supplied.

In the present embodiment, when the CPU 48a determines whether to supply RO water to the first dilution chamber 43 (second dilution chamber 44 side and ultimately determines to not supply RO water to the first dilution chamber 43 (second dilution chamber 44) side based on the electrical conductance Zw obtained by measuring the RO water, the low quality RO water can be easily discarded through the disposal port 503 by controlling the RO water flow so that the RO water is discharged from the disposal port 503.

In the present embodiment, it is possible to prevent low quality RO water from being supplied to the RO water chamber 42 on the first dilution chamber 43 (second dilution chamber 44) side by obtaining the conductance Zw of the RO water as the RO water is discharged from the disposal port 503 and supplying the RO water to the RO water chamber 42 on the first dilution chamber 43 (second dilution chamber 44) side after confirming that the quality (conductance Zw) of the RO water is satisfactory by controlling the RO water flow so as to supply the RO water to the RO water chamber 42 on the first dilution chamber 43 (second dilution chamber 44) side when the CPU 48a controls the RO water flow so as to supply RO water to the disposal port 503 and obtains the electrical conductance Zw of the RO water flowing toward the disposal port 503 via the electrical conductance measuring unit 400, then the CPU 48a determines whether to supply RO water to the first dilution chamber 43 (second dilution chamber 44) based on the electrical conductance Zw and ultimately determines to supply the RO water to the first dilution chamber 43 (second dilution chamber 44) (that is, store the RO water in the RO water chamber 42).

In the present embodiment, supplying low quality RO water to the first dilution chamber 43 (second dilution chamber 44) side can be prevented even when the water quality decreases while the RO water is being supplied to the first dilution chamber 43 (second dilution chamber 44) side because the supply of the RO water is stopped to the RO water chamber 42 when the RO water quality decreases while the RO water is being supplied to the RO water chamber 42 on the first dilution chamber 43 (second dilution chamber 44) side by controlling the RO water flow so as to discard the RO water from the disposal port 503 when the CPU 48a has obtained the RO water conductance Zw via the electrical conductance measuring unit 400 while the RO water is being supplied to the RO water chamber 42 on the first dilution chamber 43 (second dilution chamber 44) side, and determined to stop the supply of RO water via the determination of whether to stop the RO water delivery to the RO water chamber 42 based on the electrical conductance Zw.

In the present embodiment, changes in the quality (purity) of the pure water can be rapidly dealt with when water quality decreases while RO water is being supplied to the RO waiter chamber 42 on the first dilution chamber 43 (second dilution chamber 44) side and when a reduction in water quality is cancelled while RO water delivery is stopped to the first dilution chamber 43 (second dilution chamber 44) side (while RO water is discharged from the disposal port 503) because the CPU 48a continuously obtains the RO water conductance Zw via the electrical conductance measuring unit 400 for continuously measuring the RO water conductance Zw, and the CPU 48a controls the RO water flow so as to be continuous.

In the present embodiment, RO water is continuously supplied from the RO water chamber 42 to the first dilution chamber 43 (second dilution chamber 44) without immediately stopping the reagent preparing operation even when water quality decreases and the RO water delivery is stopped because RO water of satisfactory quality (electrical conductance Zw) is prestored in the RO water chamber 42 by the CPU 48a controlling the RO water flow to the RO water chamber 42 for storing the RO water to be supplied to the first dilution chamber 43 (second dilution chamber 44) based on the conductance Zw obtained by measuring the RO water.

In the present embodiment, it is possible to prevent the inflow of low quality RO water that remains in the flow channel to the first dilution chamber 43 (second dilution chamber 44) side that occurs when low quality (purity) RO water remains in the flow channel by using both the flow channel 501 for supplying RO water of satisfactory quality (purity) to the RO water chamber 42 and the flow channel 502 for supplying (discarding) the low quality (purity) RO water to the disposal port 503 via the supply valve 207b and disposal valve 207c by the CPU 48a controlling the RO water flow by controlling the flow channel switching part configured by the supply valve 207b and disposal valve 207c to switch the RO water flow channel.

In the present embodiment, a user can be notified when maintenance is urgently required for the RO water manufacturing part (RO water supply unit) 7 based on a level 2 abnormality notice, and a user can be notified when the maintenance period is near based on a level 1 abnormality notice by the CPU 48a issuing a level 2 abnormality and controlling the RO water flow so that RO water is not supplied to the RO water chamber 42 when the conductance Zw exceeds level 2 (when conductance Zw is greater than the second threshold value Z2 of approximately 3 to 5 ($\mu$s/cm)), and issuing a level 1 abnormality (conductance Zw is greater than the first threshold Z1 of about 1 ($\mu$s/cm)) while supplying RO water to the RO water chamber 42 when the electrical conductance Zw is less than level 2 but exceeds level 1 (first threshold Z21 is about 1 ($\mu$s/cm)).

In the present embodiment, the electrical conductance Zw of RO water that has low conductance can be accurately measured by configuring the interval D1 between the electrodes of the electrical conductance measuring unit 400 to be less than the interval D2 between the electrodes of the electrical conductance measuring unit 410.

Note that the embodiment of the present disclosure is not in any way limited to the example provided herein. The scope of the present invention is defined by the scope of the claims and not the description of the embodiment, and includes all meanings and equivalences, and all modifications within the scope of the claims.

For example, although the above embodiment is described in terms of a reagent preparing apparatus 4 having a separately installed measurement part 2 as an example of the reagent preparing apparatus of the present invention, the present invention is measurement to this configuration. The reagent preparing apparatus of the present invention may also be a reagent preparing apparatus that functions as a reagent preparing device disposed within the measurement part. The present invention is also applicable to a reagent preparing device installed in a measurement part (apparatus) such as, for example, a blood cell counter, immunological measurement apparatus, blood smear preparing apparatus and the like.

Although the above embodiment is described by way of example in which the Ro water manufacturing part is provided outside of the reagent preparing apparatus 4, the present invention is not limited to this configuration. In the present invention, the RO water manufacturing part also may be provided within the reagent preparing apparatus as a part of the reagent preparing apparatus. In this case, the RO water flow may be controlled based on the measured conductance obtained by measuring the quality (electrical conductance) of the RO water in the process of supplying RO water from the RO water manufacturing part to the dilution chamber side (Ro water chamber).

Although the above embodiment is described by way of example in which an RO water chamber 42 is provided to store the RO water to be supplied to the first dilution chamber 43 (second dilution chamber 44), the present invention is not limited to this configuration. In the present invention, RO water also may be directly supplied from the RO water manufacturing part to the dilution chamber via the diaphragm pump without providing an RO water chamber. In this case, the RO water flow may be controlled based on the measured conductance obtained by measuring the quality (electrical conductance) of the RO water in the process of supplying RO water from the RO water manufacturing part to the dilution chamber side.

Although the above embodiment is described by way of example in which two dilution chambers (first dilution chamber 43 and second dilution chamber 44) are provided as an example of the mixing device of the present invention, the present invention is not limited to this configuration. In the present invention, a single mixing device (dilution chamber) may be provided, or three or more mixing devices (dilutions chambers) may be provided

Although the above embodiment is described by way of example in which an electrical conductance measuring unit 400 is provided for measuring the quality of the Ro water by measuring the electrical conductance Zw of the RO water, and includes a conductance measuring meter as an example of the water quality measurement part of the present invention, the present invention is not limited to this configuration. The water quality measurement part of the present invention also may obtain parameters that reflect the water quality, other than electrical conductance. For example, a pH meter, absorption spectrometer or the like may be used as the water quality measurement part of the present invention. Moreover, instead of measuring the amount of electrically conductive impurity, for example, the amount of nonconductive impurity (total organic carbon (TOC)) may be measured as the water quality of the pure water (RO water).

Although the above embodiment is described by way of example in which the electrical conductance measuring unit 400 continuously measures the conductance of the RO water passing through the interior of the electrical conductance measuring unit 400 as an example of the water quality measurement part of the present invention, the present invention is not limited to this configuration. For example, a water quality measurement part for measuring the electrical conductance of the stored RO water also may be used when a set amount of RO water is stored.

Although the above embodiment is described by way of example in which a single electrical conductance measuring unit 400 is provided to measure the conductance of the RO water as an example of the water quality measurement part of the present invention, the present invention is not limited to this configuration. In the present invention, a plurality of water quality measurement parts may be provided.

Although the above embodiment is described by way of example in which RO water is discarded from the disposal port 503 when the RO water conductance Zw does not satisfy a predetermined condition (when Zw is greater than the second threshold value Z2), the present invention is not limited to this configuration. For example, pure water (RO water) that does not satisfy the predetermined condition may be supplied to a filter device provided inside or outside of the reagent preparation apparatus so that the quality of the filtered pure water (RO water) can be remeasured, without discarding the pure water (RO water) when the quality of the pure water (RO water) does not satisfy the predetermined condition.

Although the above embodiment is described by way of example in which the electrical conductance measuring unit 400 for measuring the conductance of the RO water is disposed on the flow channel (on flow channel 500) leading to the first dilution chamber 43 (second dilution chamber 44) as an example of the water quality measurement part of the present invention, the present invention is not limited to this configuration. For example, a flow channel may be provided that is separate from the flow channel 500 leading to the first dilution chamber 43 (second dilution chamber 44), so as to obtain the quality of the pure water (RO water) flowing in the separate flow path.

Although the above embodiment is described by way of example in which the water quality (electrical conductance Zw) is continuously measured by the electrical conductance measuring unit 400 as an example of the water quality measurement part of the present invention, the present invention is not limited to this configuration. For example, the pure water (RO water) can be continuously supplied to a storage container when the water quality of the pure water (RO water) is continuously measured while flowing toward the disposal port and the water quality does not satisfy the predetermined condition.

Although the above embodiment is described by way of example in which a level 1 abnormality (warning notice) is issued in which RO water can still be supplied to the RO water chamber 42, and a level 2 abnormality (abnormality notice) is issued in which RO water is not supplied to the RO water chamber 42 according to water quality information (electrical conductance Zw), the present invention is not limited to this configuration. In the present invention a notice of an abnormality may be issued only when pure water (RO water) can not be supplied, or a notice may be issued according to the level of abnormality when three or more levels of abnormality are provided. Further, notification of an abnormality also may not be issued.

Although the above embodiment is described by way of example in which notification of an abnormality is issued according to the water quality information (electrical conductance Zw) by displaying the notice on the display of the data processing part 3, the present invention is not limited to this configuration. For example, the reagent preparation apparatus may be provided with a display, so that the abnormality notice can be displayed on the reagent preparation apparatus. Further, some other method of notification, such as audio or the like may be used without displaying a notice on the display. In the case of notification via display, notification of an abnormality may also be issued by lighting an LED or the like of a predetermined color (for example, red) to indicate the abnormality without displaying a message.

Although the above embodiment is described by way of example in which a first threshold value Z1 of approximately 1 $\mu$s/cm) and a second threshold value Z2 of approximately 3 to 5 ($\mu$s/cm) are used as conditions for determined whether to issue notice of an abnormality, the present invention is not limited to this configuration. These threshold values will differ according to the region of use, type of reagent and the like, and may be changed to other values according to the purpose of the user.

Although the above embodiment is described by way of example in which, when the RO water is being supplied to the RO water chamber, the flow channel 500 initially connected to the flow channel 502 is switched from the flow channel 502 to the flow channel 501 to supply RO water to the RO water chamber 42 after confirming that the RO water conductance Zw is less than level 2 (Zw>Z2) by measuring the conductance Zw of the RO water being discharged from the disposal port 503 (refer to step S21 of FIG. 8). In the present invention, the flow channel 500 initially connected to the flow channel 501 also may be switched to the flow channel 502 at the moment of confirmation that the conductance Zw is greater than level 2 (Zw>Z2), so that the RO water is discharged from the disposal port 503. For example, the conductance Zw of the RO water can be obtained up until the RO water reaches the flow channel 502 (supply valve 207b) when the distance of the flow channel 500 is long, so that the supply valve 207b can be closed (open disposal valve 207c) when water quality is low based on the RO water conductance Zw.

**Claims**

1. A reagent preparing apparatus for preparing reagent by mixing a concentrated reagent and a diluting liquid and supplying the prepared reagent to a clinical sample measurement apparatus (2) which measures a clinical sample using the supplied reagent, the reagent preparing apparatus comprising:

   a chamber (46) for mixing the concentrated reagent and the diluting liquid;
   a liquid quality measurement part (400) for measuring a quality of the diluting liquid; and
   a controller (48) for controlling a flow of the diluting liquid based on the quality of the diluting liquid measured by the liquid quality measurement part (400);
   wherein the controller (48) is further **characterised in that** it is configured to determine whether the quality of the diluting liquid measured by the liquid quality measurement part (400) satisfies a predetermined standard including a first standard and a second standard, and
   issues a first abnormality notice related to the quality of the diluting liquid and controls the flow of the diluting liquid to not supply the diluting liquid to the chamber side when the quality does not satisfy the second standard; and
   issues a second abnormality notice and controls the flow of the diluting liquid to supply the diluting liquid to the chamber when the quality satisfies the second standard but does not satisfy the first standard.

2. The reagent preparing apparatus of claim 1 further comprising a flow channel (303) toward the chamber (46) and another flow channel (304), wherein the controller (48) is configured to switch a flow channel to flow diluting liquid between the flow channel (303) toward the chamber (46) and the another flow channel (304).

3. The reagent preparing apparatus of claim 1 or 2, further comprising a disposal port (503) for discarding the diluting liquid; wherein the controller (48):

   determines whether to supply the diluting liquid to the chamber (46) based on the measured quality of the diluting liquid; and
   controls the flow of the diluting liquid to discard the diluting liquid from the disposal port (503) when the controller (48) determines to not supply the diluting liquid to the chamber side.

4. The reagent preparing apparatus of claim 3, wherein the controller (48):

controls the flow of the diluting liquid to supply the diluting liquid to the disposal port (503), measures the quality of the diluting liquid flowing toward the disposal port (503) using the liquid quality measurement part (400), and determines whether to supply the diluting liquid to the chamber (46) based on the measured quality; and controls the flow of the diluting liquid to supply the diluting liquid to the chamber (46) when the controller (48) determines to supply the diluting liquid to the chamber (46).

5. The reagent preparing apparatus of claim 3, wherein the controller (48):

controls the flow of the diluting liquid to supply the diluting liquid to the chamber side and measures the quality of the diluting liquid flowing toward the chamber side using the liquid quality measurement part (400);
determines whether to stop the supply of diluting liquid to the chamber (46) based on the measured quality; and
controls the flow of the diluting liquid to discard the diluting liquid from the disposal port (503) when the controller (48) determines to stop the supply has been determined.

6. The reagent preparing apparatus of any one of claims 1 to 5, wherein
the controller (48) controls the flow of diluting liquid so that the diluting liquid flows continuously, and controls the liquid quality measurement part (400) to continuously measure the quality of the diluting liquid.

7. The reagent preparing apparatus of any one of claims 1 to 6, further comprising a storage chamber (7a) for storing the diluting liquid to be supplied to the chamber (46), wherein

the liquid quality measurement part (400) is disposed on the upstream side of the storage chamber (7a); and
the controller (48) controls the flow of the diluting liquid to the storage chamber (7a) based on the measured quality of the diluting liquid.

8. The reagent preparing apparatus of any one of claims 1 to 7, further comprising:

a disposal port (503) for discarding the diluting liquid; and
a flow channel switching part for switching the flow channel of the flowing diluting liquid between a flow channel (501) leading from the liquid quality measurement part (400) to the chamber (46), and a flow channel (502) leading from the liquid quality measurement part (400) to the disposal port (503), wherein
the controller (48) controls the flow of the diluting liquid by controlling the flow channel switching part to switch the flow channel.

9. The reagent preparing apparatus of any one of claims 1 to 8, wherein
the liquid quality measurement part (400) measures the electrical conductance of the diluting liquid as the quality.

10. The reagent preparing apparatus of claim 9, wherein the liquid quality measurement part (400) passes the diluting liquid through the interior of the liquid quality measuring part and measures the electrical conductance of the diluting liquid passing therethrough.

11. The reagent preparing apparatus of any one of claims 1 to 10, further comprising a second liquid quality measurement part (410) for measuring the quality of a mixed solution that has been mixed in the chamber (46), wherein
the controller (48) controls the second liquid quality measurement part (410) to measure the quality of the mixed solution, and controls the flow of the mixed solution to discard the mixed solution when the measured quality of the mixed solution does not satisfy a predetermined condition.

12. The reagent preparing apparatus of claim 11, further comprising a first electrical conductance meter for measuring the electrical conductance of the mixed solution, wherein

the electrical conductance meter measures the electrical conductance of the mixed solution present between electrodes disposed at a first spacing,
the liquid quality measurement part comprises a second electrical conductance meter for measuring the electrical conductance of the diluting liquid present between electrodes disposed at a second spacing, and
the second spacing between the electrodes of the second electrical conductance meter is less than the first spacing between the electrodes of the first electrical conductance meter.

13. The reagent preparing apparatus of any one of claims 1 to 12, further comprising:

a storage chamber (7a) for storing the diluting liquid to be supplied to the chamber;
a detection part (7e) for detecting the amount of diluting liquid within the storage chamber (7a); and
an electromagnetic valve (7f) for controlling the inflow of the diluting liquid, wherein the controller (48) controls the electromagnetic valve (7f) so the diluting liquid flows in, and controls the liquid quality measurement part (400) to measure the quality of the inflowing diluting liquid when the detection part (7e) detects a reduced amount of diluting liquid within the storage chamber (7a).

**Patentansprüche**

1. Reagenzherstellungseinrichtung zur Herstellung von Reagenz durch Mischen eines konzentrierten Reagenzes und einer Verdünnungsflüssigkeit und Zuführen des hergestellten Reagenzes zu einer Messeinrichtung (2) für klinische Proben, die eine klinische Probe unter Verwendung des zugeführten Reagenzes misst, wobei die Reagenzherstellungseinrichtung umfasst:

   eine Kammer (46) zum Mischen des konzentrierten Reagenzes und der Verdünnungsflüssigkeit;
   ein Flüssigkeitsgüte-Messteil (400) zum Messen einer Güte der Verdünnungsflüssigkeit; und
   eine Steuerung (48) zum Steuern eines Stroms der Verdünnungsflüssigkeit basierend auf der Güte der Verdünnungsflüssigkeit, die durch das Flüssigkeitsgüte-Messteil (400) gemessen wird;
   wobei die Steuerung (48) weiter **dadurch gekennzeichnet ist, dass** sie konfiguriert ist, um zu bestimmen, ob die Güte der Verdünnungsflüssigkeit, die durch das Flüssigkeitsgüte-Messteil (400) gemessen wird, einem vorbestimmten Standard entspricht, der einen ersten Standard und einen zweiten Standard einschließt, und
   eine erste Anomaliemeldung in Bezug auf die Güte der Verdünnungsflüssigkeit ausgibt und den Strom der Verdünnungsflüssigkeit steuert, um die Verdünnungsflüssigkeit nicht an die Kammerseite zuzuführen, wenn die Güte nicht dem zweiten Standard entspricht; und
   eine zweite Anomaliemeldung ausgibt und den Strom der Verdünnungsflüssigkeit steuert, um die Verdünnungsflüssigkeit an die Kammer zuzuführen, wenn die Güte dem zweiten Standard entspricht, aber nicht dem ersten Standard entspricht.

2. Reagenzherstellungseinrichtung nach Anspruch 1, weiter umfassend einen Strömungskanal (303) in Richtung der Kammer (46) und einen weiteren Strömungskanal (304), wobei
   die Steuerung (48) konfiguriert ist, um einen Strömungskanal umzuschalten, um Verdünnungsflüssigkeit zwischen dem Strömungskanal (303) in Richtung der Kammer (46) und des anderen Strömungskanals (304) strömen zu lassen.

3. Reagenzherstellungseinrichtung nach Anspruch 1 oder 2, weiter umfassend eine Entsorgungsöffnung (503) zum Verwerfen der Verdünnungsflüssigkeit; wobei
   die Steuerung (48):

   bestimmt, ob die Verdünnungsflüssigkeit basierend auf der gemessenen Güte der Verdünnungsflüssigkeit an die Kammer (46) zugeführt werden soll; und
   den Strom der Verdünnungsflüssigkeit steuert, um die Verdünnungsflüssigkeit aus der Entsorgungsöffnung (503) zu verwerfen, wenn die Steuerung (48) bestimmt, dass die Verdünnungsflüssigkeit nicht an die Kammerseite zugeführt werden soll.

4. Reagenzherstellungseinrichtung nach Anspruch 3, wobei
   die Steuerung (48):

   den Strom der Verdünnungsflüssigkeit steuert, um die Verdünnungsflüssigkeit an die Entsorgungsöffnung (503) zuzuführen, die Güte der Verdünnungsflüssigkeit, die zur Entsorgungsöffnung (503) strömt, unter Verwendung des Flüssigkeitsgüte-Messteils (400) misst und bestimmt, ob die Verdünnungsflüssigkeit basierend auf der gemessenen Güte an die Kammer (46) zugeführt werden soll; und
   den Strom der Verdünnungsflüssigkeit steuert, um die Verdünnungsflüssigkeit an die Kammer (46) zuzuführen, wenn die Steuerung (48) bestimmt, dass die Verdünnungsflüssigkeit an die Kammer (46) zugeführt werden soll.

5. Reagenzherstellungseinrichtung nach Anspruch 3, wobei
   die Steuerung (48):

   den Strom der Verdünnungsflüssigkeit steuert, um die Verdünnungsflüssigkeit an die Kammerseite zuzuführen, und die Güte der Verdünnungsflüssigkeit, die zur Kammerseite strömt, unter Verwendung des Flüssigkeitsgüte-Messteils (400) misst;
   bestimmt, ob die Zufuhr von Verdünnungsflüssigkeit an die Kammer (46) basierend auf der gemessenen Güte gestoppt werden soll; und
   den Strom der Verdünnungsflüssigkeit steuert, um die Verdünnungsflüssigkeit aus der Entsorgungsöffnung (503) zu verwerfen, wenn die Steuerung (48) bestimmt, dass die Zufuhr gestoppt werden soll bestimmt wurde.

6. Reagenzherstellungseinrichtung nach einem der Ansprüche 1 bis 5, wobei
die Steuerung (48) den Strom der Verdünnungsflüssigkeit so steuert, dass die Verdünnungsflüssigkeit kontinuierlich strömt, und das Flüssigkeitsgüte-Messteil (400) steuert, um die Güte der Verdünnungsflüssigkeit kontinuierlich zu messen.

7. Reagenzherstellungseinrichtung nach einem der Ansprüche 1 bis 6, weiter umfassend eine Speicherkammer (7a) zum Speichern der Verdünnungsflüssigkeit, die an die Kammer (46) zugeführt werden soll, wobei
das Flüssigkeitsgüte-Messteil (400) auf der stromaufwärtigen Seite der Speicherkammer (7a) angeordnet ist; und
die Steuerung (48) den Strom der Verdünnungsflüssigkeit zu der Speicherkammer (7a) basierend auf der gemessenen Güte der Verdünnungsflüssigkeit steuert.

8. Reagenzherstellungseinrichtung nach einem der Ansprüche 1 bis 7, weiter umfassend:

eine Entsorgungsöffnung (503) zum Verwerfen der Verdünnungsflüssigkeit; und
ein Strömungskanal-Umschaltteil zum Umschalten des Strömungskanals der strömenden Verdünnungsflüssigkeit zwischen einem Strömungskanal (501), der vom Flüssigkeitsgüte-Messteil (400) zur Kammer (46) führt, und einem Strömungskanal (502), der vom Flüssigkeitsgüte-Messteil (400) zur Entsorgungsöffnung (503) führt, wobei
die Steuerung (48) den Strom der Verdünnungsflüssigkeit durch Steuern des Strömungskanal-Umschaltteils steuert, um den Strömungskanal umzuschalten.

9. Reagenzherstellungseinrichtung nach einem der Ansprüche 1 bis 8, wobei
das Flüssigkeitsgüte-Messteil (400) die elektrische Leitfähigkeit der Verdünnungsflüssigkeit als die Güte misst.

10. Reagenzherstellungseinrichtung nach Anspruch 9, wobei
das Flüssigkeitsgüte-Messteil (400) die Verdünnungsflüssigkeit durch das Innere des Flüssigkeitsgüte-Messteils leitet und die elektrische Leitfähigkeit der dort durchgehenden Verdünnungsflüssigkeit misst.

11. Reagenzherstellungseinrichtung nach einem der Ansprüche 1 bis 10, weiter umfassend ein zweites Flüssigkeitsgüte-Messteil (410) zur Messung der Güte einer Mischlösung, die in der Kammer (46) gemischt wurde, wobei
die Steuerung (48) das zweite Flüssigkeitsgüte-Messteil (410) steuert, um die Güte der Mischlösung zu messen, und den Strom der Mischlösung steuert, um die Mischlösung zu verwerfen, wenn die gemessene Güte der Mischlösung eine vorbestimmte Bedingung nicht erfüllt.

12. Reagenzherstellungseinrichtung nach Anspruch 11, weiter umfassend ein erstes elektrisches Leitfähigkeitsmessgerät zum Messen der elektrischen Leitfähigkeit der Mischlösung, wobei
das elektrische Leitfähigkeitsmessgerät die elektrische Leitfähigkeit der Mischlösung misst, die zwischen Elektroden vorhanden ist, die in einem ersten Abstand angeordnet sind,
das Flüssigkeitsgüte-Messteil ein zweites elektrisches Leitfähigkeitsmessgerät zum Messen der elektrischen Leitfähigkeit der zwischen Elektroden vorhandenen Verdünnungsflüssigkeit umfasst, die in einem zweiten Abstand angeordnet sind, und
der zweite Abstand zwischen den Elektroden des zweiten elektrischen Leitfähigkeitsmessgerätes kleiner ist als der erste Abstand zwischen den Elektroden des ersten elektrischen Leitfähigkeitsmessgerätes.

13. Reagenzherstellungseinrichtung nach einem der Ansprüche 1 bis 12, weiter umfassend:

eine Speicherkammer (7a) zum Speichern der Verdünnungsflüssigkeit, die an die Kammer zugeführt werden soll;
ein Erfassungsteil (7e) zum Erfassen der Menge an Verdünnungsflüssigkeit innerhalb der Speicherkammer (7a); und
ein elektromagnetisches Ventil (7f) zum Steuern des Zustroms der Verdünnungsflüssigkeit, wobei
die Steuerung (48) das elektromagnetische Ventil (7f) so steuert, dass die Verdünnungsflüssigkeit einströmt, und das Flüssigkeitsgüte-Messteil (400) steuert, um die Güte der einströmenden Verdünnungsflüssigkeit zu messen, wenn das Erfassungsteil (7e) eine verringerte Menge an Verdünnungsflüssigkeit innerhalb der Speicherkammer (7a) erfasst.

**Revendications**

1. Appareil de préparation de réactif pour préparer un réactif par mélange d'un réactif concentré et d'un liquide de dilution et introduction du réactif préparé dans un appareil de mesure d'échantillon clinique (2) qui mesure un échantillon clinique en utilisant le réactif introduit, l'appareil de préparation de réactif comprenant :

une chambre (46) pour mélanger le réactif concentré et le liquide de dilution ;
une partie de mesure de qualité de liquide (400) pour mesurer une qualité du liquide de dilution ; et
un dispositif de commande (48) pour commander un écoulement du liquide de dilution sur la base de la qualité du liquide de dilution mesurée par la partie de mesure de qualité de liquide (400) ;
dans lequel le dispositif de commande (48) est **caractérisé en outre en ce qu'**il est configuré pour déterminer si la qualité du liquide de dilution mesurée par la partie de mesure de qualité de liquide (400) satisfait une norme prédéterminée incluant une première norme et une seconde norme, et
délivre une première notification d'anomalie relative à la qualité du liquide de dilution et commande l'écoulement du liquide de dilution pour ne pas introduire le liquide de dilution du côté chambre quand la qualité ne satisfait pas la seconde norme ; et
délivre une seconde notification d'anomalie et commande l'écoulement du liquide de dilution pour introduire le liquide de dilution dans la chambre quand la qualité satisfait la seconde norme mais ne satisfait pas la première norme.

2. Appareil de préparation de réactif selon la revendication 1 comprenant en outre un canal d'écoulement (303) vers la chambre (46) et un autre canal d'écoulement (304), dans lequel
le dispositif de commande (48) est configuré pour changer un canal d'écoulement pour une écoulement du liquide de dilution entre le canal d'écoulement (303) vers la chambre (46) et l'autre canal d'écoulement (304).

3. Appareil de préparation de réactif selon la revendication 1 ou 2, comprenant en outre un orifice d'évacuation (503) pour mettre au rebut le liquide de dilution ; dans lequel
le dispositif de commande (48) :

détermine s'il faut introduire le liquide de dilution dans la chambre (46) sur la base de la qualité mesurée du liquide de dilution ; et
commande l'écoulement du liquide de dilution pour mettre au rebut le liquide de dilution à partir de l'orifice d'évacuation (503) quand le dispositif de commande (48) détermine qu'il ne faut pas introduire le liquide de dilution du côté chambre.

4. Appareil de préparation de réactif selon la revendication 3, dans lequel le dispositif de commande (48) :

commande l'écoulement du liquide de dilution pour introduire le liquide de dilution dans l'orifice d'évacuation (503), mesure la qualité du liquide de dilution s'écoulant vers l'orifice d'évacuation (503) en utilisant la partie de mesure de qualité de liquide (400), et détermine s'il faut introduire le liquide de dilution dans la chambre (46) sur la base de la qualité mesurée ; et
commande l'écoulement du liquide de dilution pour introduire le liquide de dilution dans la chambre (46) quand le dispositif de commande (48) détermine qu'il faut introduire le liquide de dilution dans la chambre (46).

5. Appareil de préparation de réactif selon la revendication 3, dans lequel le dispositif de commande (48) :

commande l'écoulement du liquide de dilution pour introduire le liquide de dilution du côté chambre et mesure la qualité du liquide de dilution s'écoulant vers le côté chambre en utilisant la partie de mesure de qualité de liquide (400) ;
détermine s'il faut arrêter d'introduire le liquide de dilution dans la chambre (46) sur la base de la qualité mesurée ; et
commande l'écoulement du liquide de dilution pour mettre au rebut le liquide de dilution à partir de l'orifice d'évacuation (503) quand le dispositif de commande (48) détermine que l'arrêt de l'introduction a été déterminé.

6. Appareil de préparation de réactif selon l'une quelconque des revendications 1 à 5, dans lequel le dispositif de commande (48) commande l'écoulement de liquide de dilution pour que le liquide de dilution s'écoule en continu, et commande la partie de mesure de qualité de liquide (400) pour qu'elle mesure en continu la qualité du liquide de dilution.

7. Appareil de préparation de réactif selon l'une quelconque des revendications 1 à 6, comprenant en outre une chambre de stockage (7a) pour stocker le liquide de dilution à introduire dans la chambre (46), dans lequel
la partie de mesure de qualité de liquide (400) est disposée du côté amont de la chambre de stockage (7a) ; et
le dispositif de commande (48) commande l'écoulement du liquide de dilution vers la chambre de stockage (7a) sur la base de la qualité mesurée du liquide de dilution.

8. Appareil de préparation de réactif selon l'une quelconque des revendications 1 à 7, comprenant en outre :

un orifice d'évacuation (503) pour mettre au rebut le liquide de dilution ; et
une partie de changement de canal d'écoulement pour changer le canal d'écoulement du liquide de dilution s'écoulant entre un canal d'écoulement (501) menant de la partie de mesure de qualité de liquide (400) à la chambre (46), et un canal d'écoulement (502) menant de la partie de mesure de qualité de liquide (400) à l'orifice d'évacuation (503), dans lequel le dispositif de commande (48) commande l'écoulement du liquide de dilution en commandant la partie de changement de canal d'écoulement pour changer le canal d'écoulement.

9. Appareil de préparation de réactif selon l'une quelconque des revendications 1 à 8, dans lequel la partie de mesure de qualité de liquide (400) mesure la conductance électrique du liquide de dilution comme étant la qualité.

10. Appareil de préparation de réactif selon la revendication 9, dans lequel la partie de mesure de qualité de liquide (400) passe le liquide de dilution à travers l'intérieur de la partie de mesure de qualité de liquide et mesure la conductance électrique du liquide de dilution passant à travers celle-ci.

11. Appareil de préparation de réactif selon l'une quelconque des revendications 1 à 10, comprenant en outre une seconde partie de mesure de qualité de liquide (410) pour mesurer la qualité d'une solution mélangée qui a été mélangée dans la chambre (46), dans lequel le dispositif de commande (48) commande la seconde partie de mesure de qualité de liquide (410) pour mesurer la qualité de la solution mélangée, et commande l'écoulement de la solution mélangée pour mettre au rebut la solution mélangée quand la qualité mesurée de la solution mélangée ne satisfait pas une condition prédéterminée.

12. Appareil de préparation de réactif selon la revendication 11, comprenant en outre un premier dispositif de mesure de conductance électrique pour mesurer la conductance électrique de la solution mélangée, dans lequel le dispositif de mesure de conductance électrique mesure la conductance électrique de la solution mélangée présente entre des électrodes disposées au niveau d'un premier espacement, la partie de mesure de qualité de liquide comprend un second dispositif de mesure de conductance électrique pour mesurer la conductance électrique du liquide de dilution présent entre des électrodes disposées au niveau d'un second espacement, et le second espacement entre les électrodes du second dispositif de mesure de conductance électrique est plus petit que le premier espacement entre les électrodes du premier dispositif de mesure de conductance électrique.

13. Appareil de préparation de réactif selon l'une quelconque des revendications 1 à 12, comprenant en outre :

une chambre de stockage (7a) pour stocker le liquide de dilution à introduire dans la chambre; une partie de détection (7e) pour détecter la quantité de liquide de dilution au sein de la chambre de stockage (7 a) ; et une vanne électromagnétique (7f) pour réguler l'écoulement entrant du liquide de dilution, dans lequel le dispositif de commande (48) commande la vanne électromagnétique (7f) pour que le liquide de dilution entre, et commande la partie de mesure de qualité de liquide (400) pour mesurer la qualité du liquide de dilution entrant quand la partie de détection (7e) détecte une quantité réduite de liquide de dilution au sein de la chambre de stockage (7a).

Tap water →
Disposal ←

**FIG. 1**

FIG. 2

**FIG. 3**

**FIG. 4**

FIG. 5

FIG. 6

Reagent preparation process

```
                    ┌─────────────┐
                    │    Start     │
                    └──────┬──────┘
                           │          S1
                    ┌──────▼──────┐
                    │  Initialize  │
                    └──────┬──────┘
                           │
                    ┌──────▼──────────┐  S2
                    │ RO water manufacturing │
                    │ process         │
                    └──────┬──────────┘
                           │          S3
        No            ◇────▼────◇
       ◄──────────────  Require supply to
                        RO water chamber?
                        ◇─────────◇
                           │ Yes
                    ┌──────▼──────┐  S4
                    │ RO water supply process │
                    └──────┬──────┘
                           │
                           │              S5
                    ◇──────▼──────────◇      Yes
                     Predetermined amount of reagent ──────►
                     present in supply chamber?
                    ◇─────────────────◇
                           │ No          S6
      ┌────────────────────▼────────────────────────────┐
      │ Supply RO water and concentrated reagent to the dilution chamber │
      └────────────────────┬────────────────────────────┘
                           │                           S7
      ┌────────────────────▼────────────────────────────┐
      │ Move reagent in the dilution chamber to the mixing │
      │ chamber (supply concentrated reagent and RO water to the │
      │ dilution chamber) │
      └────────────────────┬────────────────────────────┘
                           │                           S8
      ┌────────────────────▼────────────────────────────┐
      │ Move reagent in the mixing chamber to the supply chamber │
      └────────────────────┬────────────────────────────┘
                           │                           S9
      ┌────────────────────▼────────────────────────────┐
      │             Obtain conductance Zr                │
      └────────────────────┬────────────────────────────┘
                           │              S10
                    ◇──────▼──────────◇      No      S11
                     Conductance Zr within ──────────►
                     predetermined range?        ┌───────────────┐
                    ◇─────────────────◇          │ Discard reagent │
                           │ Yes                 └───────────────┘
                           │              S12
      No          ◇────────▼─────────◇
     ◄─────────────  Shutdown instruction?
                    ◇─────────────────◇
                           │ Yes          S13
                    ┌──────▼──────┐
                    │ Shutdown process │
                    └──────┬──────┘
                           │
                    ┌──────▼──────┐
                    │     End      │
                    └─────────────┘
```

# FIG. 7

RO water supply process

FIG. 8

| Abnormality notice |
| --- |
| There is a problem with water quality. Dilution can not be performed. Please check the RO water supply unit. |

## FIG. 9

| Warning notice |
| --- |
| The maintenance period is near. Please check the RO water supply unit. |

## FIG. 10

**EP 2 348 299 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010161243 A
- WO 2009087828 A1
- WO 2009026919 A2
- WO 2010004789 A1
- EP 2233929 A2